# EUROPÄISCHE PATENTSCHRIFT

(11) **EP 1 382 088 B1**
(45) Veröffentlichungstag und Bekanntmachung des Hinweises auf die Patenterteilung: **08.06.2011**
(21) Anmeldenummer: 02748651.3
(22) Anmeldetag: 05.04.2002
(51) Int. Cl.: H01R 9/24, H04Q 1/14

(54) **ERDUNGSVORRICHTUNG SOWIE VERTEILEREINRICHTUNG**
EARTH DEVICE AND DISTRIBUTION BOARD
DISPOSITIF DE MISE A LA TERRE ET INSTALLATION DE DISTRIBUTION

(30) Priorität: 27.04.2001 DE 10120720
(43) Veröffentlichungstag der Anmeldung: 21.01.2004
(73) Patentinhaber: CCS Technology, Inc., Wilmington, DE 19803 (US)
(72) Erfinder: MATTHIES, Jürgen, 58455 Witten (DE); BREUER, Mike, 59065 Hamm (DE)
(74) Vertreter: Sturm, Christoph
(86) Internationale Anmeldenummer: PCT/EP2002/003823
(87) Internationale Veröffentlichungsnummer: WO 2002/089262

(56) Entgegenhaltungen:
- EP-A- 0 524 115
- EP-A- 1 005 235
- EP-A- 1 047 164
- DE-U- 9 310 953

## Beschreibung

Erdungsvorrichtung und Erdungseinrichtung für eine Verteilereinrichtung und Handhabungsvorrichtung zum Montieren einer Erdungsvorrichtung sowie Schutzstecker und Verteilereinrichtung

Die Erfindung betrifft eine Erdungsvorrichtung und eine Erdungseinrichtung für eine Verteilereinrichtung, wie z.B. einen Hauptverteiler einer Telekommunikationsanlage, sowie einen Schutzstecker zur Verwendung mit einer erfindungsgemäßen Erdungsvorrichtung und eine Verteilereinrichtung. Die Erfindung betrifft ferner eine Handhabungsvorrichtung zum Montieren einer Erdungsvorrichtung an eine Verteilereinrichtung.

Bei Verteilereinrichtungen von Telekommunikationsanlagen, wie z.B. einem Hauptverteiler, ist mitunter ein Überspannungsschutz erforderlich. Hierzu sind die an die Verteilereinrichtung angeschlossenen Leitungen mit jeweils zugeordneten Überspannungs-Schutzeinrichtungen verbunden, über welche, im Falle des Anliegens einer Überspannung zwischen den an der Verteilereinrichtung angeschlossenen Leitungsadern, ein zugehöriger Überspannungsstrom an Erdpotential abgeleitet werden kann. Indem aus Kosten- und Platzgründen immer mehr Anschlüsse auf engerem Raum anzuordnen sind, sind an das dadurch vorliegende, verminderte Platzangebot angepaßte Erdungseinrichtungen vorzusehen.

EP-A-1005235 offenbart eine Vorrichtung gemäß den Oberbegriff des Anspruchs 1. Durch die Erfindung werden eine Erdungsvorrichtung für eine Verteilereinrichtung, wie z.B. einen Hauptverteiler einer Telekommunikationsanlage, sowie eine Verteilereinrichtung geschaffen, womit in einfacher und flexibler Weise ein Überspannungschutz platzsparend realisierbar ist.

Die erfindungsgemäße Erdungsvorrichtung für eine Verteilereinrichtung, wie z.B. einen Hauptverteiler einer Telekommunikationsanlage, weist eine langgestreckte Erdungsschiene aus elektrisch leitendem Material, insbesondere Metallmaterial, auf. Bevorzugt ist die Erdungsschiene ein einfaches dünnes Biegeblech, das ggf. durch Sicken verstärkt ist. Die Erdungsschiene ist an ihren Endabschnitten jeweils mit einem separaten, d.h. nicht stofflich einstückig mit der Erdungsschiene ausgebildeten, Halteteil versehen, über welches die Erdungsschiene an einem Funktionselement der Verteilereinrichtung anbringbar ist. Unter Funktionselement ist hierbei ein solches Bauteil der Verteilereinrichtung zu verstehen, an welchem eine Vielzahl von ankommenden und abgehenden elektrischen Leitungen angeschlossen sind und über welches die ankommenden und abgehenden Leitungen mittels Kontakten, wie z.B. Trennkontakten oder Schaltkontakten, elektrisch miteinander verbindbar sind. Hierbei sind ankommende elektrische Leitungen jene Leitungen, welche von außerhalb der Verteilereinrichtung, d.h. z.B. von einer Vermittlungseinrichtung, einer anderen Verteilereinrichtung oder von Teilnehmern an die Verteilereinrichtung herangeführt sind, und abgehende elektrische Leitungen sind jene Leitungen, welche auf einer Rangierseite des Funktionselements angeschlossen werden und von dort aus abgehen. Die abgehenden Leitungen dienen hierbei als Rangierleitungen, mittels denen durch Rangieren die gewünschte Kommunikationsverbindung erstellbar ist. Das Funktionselement ist z.B. in Form einer Anschlußleiste aus Kunststoff oder in Form eines plattenförmigen Kunststoffteils vorgesehen, welches eine Anschlußleiste zum Anschluß der Leitungen, insbesondere deren Leitungsadern, wie Leitungsdrähten, aufweist. An den Endabschnitten der Erdungsschiene sind elektrisch leitende Kontaktfedern vorgesehen, die z.B. über eine Klemm- oder eine Schweißverbindung mit der Schiene verbunden sind, insbesondere stofflich einstückig mit ihr ausgebildet sind und die sich an dem Halteteil vorbei erstrecken und zur Kontaktierung einer Erdungskontaktstelle der Verteilereinrichtung vorgesehen sind.

Das Vorsehen von an den Längsendabschnitten der Erdungsschiene angeordneten, separaten Halteteilen ermöglicht es in einfacher Weise, die Lage der Erdungsschiene bezüglich der Halteteile bei der Herstellung der Erdungsvorrichtung zu variieren und damit an die erforderlichen räumlichen Gegebenheiten in der Verteilereinrichtung, insbesondere an die Anordnung der Funktionselemente, anzupassen. So können z.B. einfach Halteteile mit jeweils an unterschiedlichen Stellen vorgesehenen, gleichartigen Aufnahmen für zugehörige Erdungsschienen vorgesehen werden. Die Halteteile können blockförmige, wie z.B. quaderblockförmige Teile sein, in denen Aussparungen zum Einsetzen der zugehörigen Erdungsschiene ausgeformt sind. Es können auch pro Halteteil mehrere gleichartige Aufnahmen an unterschiedlichen Positionen vorgesehen sein, so daß das Halteteil als solches flexibel verwendbar gestaltet ist.

Bevorzugt ist das jeweilige Halteteil aus Gründen der Materialersparnis in Form eines Winkelteils ausgebildet, dessen einer Winkelschenkel zur Anbringung an dem Funktionselement vorgesehen ist und dessen anderer Winkelschenkel zur Anbringung der Erdungsschiene vorgesehen ist. Die Winkelform läßt hierbei noch ausreichenden Gestaltungsspielraum bezüglich der Anordnung der Erdungsschiene relativ zu dem Funktionselement, da durch die Wahl der Länge und Ausrichtung der Winkelschenkel für die Erdungsschiene ausreichend viele Positionen relativ zu dem Funktionselement möglich sind.

Um ein ungewolltes Durchschlagen von Leitungsströmen auf die Erdungsschiene sicherer zu verhindern, sind die Halteteile bevorzugt aus einem nichtleitenden Material, insbesondere aus nichtleitendem Kunststoff, hergestellt. Solche Kunststoffteile können in einfacher und kostengünstiger Weise als Spritzgußteile vorgesehen sein. Indem die Funktionselemente ihrerseits bevorzugt aus nichtleitendem Kunststoffmaterial sind, ist Kunststoffmaterial für die Halteteile auch von daher vorteilhaft, daß die Gefahr einer Beschädigung des Funktionselements beim Ankuppeln des Halteteils verringert ist.

Nach einer Ausführungsform der Erfindung weisen die Halteteile jeweils ein Haltestück zum Anbringen am zugehörigen Funktionselement auf, welches Haltestück sich im wesentlichen in Richtung senkrecht zur Längsrichtung der Erdungsschiene erstreckt. Ferner verlaufen die Kontaktfedern im wesentlichen in die gleiche Richtung wie die Haltestücke, d.h. sie erstrecken sich im wesentlichen parallel zu den Haltestücken von der Erdungsschiene weg. Hierdurch wird eine kompakte Konstruktion erzielt, welche sich günstig auf den Raumbedarf der gesamten Verteilereinrichtung auswirkt. Das jeweilige Haltestück kann beispielsweise von dem einen Schenkel des winkelförmigen Halteteils ausgebildet sein, z.B. in Form eines zapfenförmigen Verlängerungsstücks des einen Winkelschenkels, welches in eine am Funktionselement ausgeformte Aussparung eingreifen kann. Am freien Ende des Winkelschenkels kann als Haltestück stirnseitig auch eine Aussparung vorgesehen sein, in welche ein korrespondierender Vorsprung am Funktionselement eingreifen kann. Das Haltestück kann, im Falle der Verwendung eines quaderblockförmigen Halteteils, z.B. ein zapfenförmiger Vorsprung sein, welcher in eine korrespondierende Aussparung im Funktionselement eingreifen kann, oder eine Aussparung sein, deren Öffnung in die genannte Richtung weist und in welche ein am Funktionselement vorgesehenes Eingriffsstück eingreifen kann.

Die Erdungsschiene ist vorteilhaft in eine Richtung senkrecht zu ihrer Längsrichtung sowie senkrecht zur Erstreckungsrichtung der Haltestücke gegen letztere versetzt angeordnet. Hierdurch ist eine am Funktionselement angebrachte Erdungsvorrichtung mit ihrer Erdungsschiene auch entsprechend gegen das Funktionselement versetzt angeordnet, so daß ein Bediener noch ausreichend Zugang zu dem Funktionselement hat, um ohne Behinderung durch die Erdungsvorrichtung Rangierarbeiten am Funktionselement vornehmen zu können. Die Kontaktfedern erstrecken sich bevorzugt parallel zu den Haltestücken verlaufend an den zugehörigen Halteteilen vorbei; daher sind die Kontaktfedern hierzu ausgehend von der Erdungsschiene weg in Richtung zu den versetzt angeordneten Haltestücken zu führen. Bei einer stofflich einstückig mit den Kontaktfedern ausgebildeten Erdungsschiene sind die Kontaktfedern hierzu einfach in die entsprechende Richtung winkelförmig abgebogen. Die Kontaktfedern können sich z.B. innen, d.h. an den einander zugewandten Seiten der Halteteile an diesen vorbeierstrecken, wobei dann ggf. in den Funktionselementen korrespondierende Aufnahmeöffnungen vorzusehen sind, durch welche die Kontaktfedern bis zur Erdungskontaktstelle geführt werden. Vorteilhaft erstrecken sich die Kontaktfedern bezüglich der Längsrichtung der Erdungsschiene seitlich außen an den Halteteilen vorbei und sind seitlich nach außen federnd ausspreizbar. Damit können sie eine Erdungskontaktstelle seitlich von außen her federnd kontaktieren. Dies erleichtert in konstruktiver Hinsicht die Bereitstellung einer zugehörigen Erdungskontaktstelle. Ferner sind am Funktionselement keine Aussparungen für die Kontaktfedern vorzusehen, so daß das Funktionselement effektiver zur Unterbringung von Leitungsanschlüssen ausgestaltet werden kann. Der durch die Kontaktfeder ferner bevorzugt erzielte Ein-Punkt-Federkontakt mit der Erdungskontaktstelle bringt nur geringe Leitungsverluste mit sich und kann konstruktiv ebenfalls einfach realisiert werden.

Die jeweilige Kontaktfeder ist an ihrem freien Ende bevorzugt mit einem Eingriffsteil, z.B. in Form eines Eingriffsvorsprungs oder einer Aussparung, versehen, welches mit einem korrespondierenden Eingriffsteil am Funktionselement federnd in Eingriff bringbar ist. Hierdurch wird die Kontaktfeder gleichzeitig auch als Fixierelement ausgenützt, welche bevorzugt im Zusammenspiel mit dem jeweiligen Halteteil die Erdungsvorrichtung am Funktionselement fixiert. Dadurch, daß die Kontaktfeder hierbei unmittelbar benachbart zu dem Halteteil an diesem vorbei verläuft, ergeben sich direkte und damit kurze Kraftverläufe, so daß die verwendeten Bauteile mit geringerer Festigkeit und damit leichter und kostengünstiger vorgesehen werden können.

Ein Schutzstecker zur Verwendung mit einer erfindungsgemäßen Erdungsvorrichtung weist eine Kontaktzunge auf, über welche elektrische Leitungen, die in einem zugeordneten Funktionselement verlegt und an dieses angeschlossen sind, kontaktierbar sind. Bei z.B. einem Funktionselement, an dem eine Mehrzahl von ankommenden Doppelader-Leitungen anschließbar sind, ist der erfindungsgemäße Schutzstecker z.B. mit einer Doppel-Kontaktzunge ausgebildet, auf der zwei separate Leiterbahnen ausgebildet sind, von welchen die jeweiligen Adern einer Doppelader-Leitung kontaktiert werden, falls der Schutzstecker in das Funktionselement eingesteckt ist. Gemäß der Erfindung ist an die Kontaktzunge eine Überspannungs/Überstrom-Schutzeinrichtung angeschlossen. Bezüglich des genannten Beispiels mit Doppelader-Leitungen hat die Überspannungs/Überstrom-Schutzeinrichtung dann beispielsweise zwei Elektroden, die mit der jeweiligen Leiterbahn und damit mit der zugeordneten Leitungsader der Doppelader-Leitung in Kontakt sind. Gemäß der Erfindung hat die Überspannungs/Überstrom-Schutzeinrichtung eine Erdungs-Elektrode, welche einen stabförmigen Ansatz aufweist und über welche beim Anliegen einer Überspannung, z.B. zwischen den beiden Adern einer Doppelader-Leitung, ein zugehöriger Überspannungsstrom ableitbar ist. Der erfindungsgemäße Schutzstecker hat ferner ein elektrisch leitendes Anbringteil, mittels dessen der Schutzstecker an der Erdungsschiene der Erdungseinrichtung anbringbar ist und welches mit der Erdungs-Elektrode in elektrischem Kontakt steht. Dies hat den Vorteil, daß das Anbringteil sowohl als mechanische als auch als elektrische Verbindung zwischen dem Schutzstecker und der Erdungsvorrichung dient. Zur Herstellung dieses mechanischen und des elektrischen Kontakts weist das Anbringteil erfindungsgemäß auf: eine Schneidklemme, mittels welcher das Anbringteil an den stabförmigen Ansatz der Erdungs-Elektrode geklemmt ist, und ein Befestigungsteil zur Befestigung des Anbringteils an der Erdungsschiene.

Die Schneidklemme stellt eine sichere und einfache mechanische sowie elektrische Verbindung zwischen dem Schutzstecker und der Erdungsvorrichtung her. Im Gegensatz zu einer Lötverbindung besteht bei der Schneidklemme nicht die Gefahr eines Entlötens, falls die Verbindungsstelle bei hohen Überspannungsströmen heiß werden sollte. Ferner werden von der Schneidklemme auch keine derartigen Kräfte auf den Schutzstecker ausgeübt, die durch sonstige äußere Lagerungen abgefangen werden müßten. Damit werden die verbleibenden Schutzsteckerkomponenten bevorzugt ausschließlich über die Schneidklemm-Verbindung an dem Anbringteil gehalten, welches demgemäß auch bevorzugt allein den Schutzstecker an der Erdungsvorrichtung hält.

Das Befestigungsteil ist bevorzugt ebenfalls als Klemmteil vorgesehen, das an die Erdungsvorrichtung, d.h. an deren Erdungsschiene, anklemmbar ist. Dieses Klemmteil kann ebenfalls eine Schneidklemme sein, wobei die Erdungsschiene hierzu z.B. mit korrespondierenden Zapfen versehen ist, an die diese Schneidklemme angeklemmt werden kann. Bevorzugt ist das Klemmteil mit zwei solchen elastisch ausfederbaren Klemmschenkeln versehen, zwischen denen die Erdungschiene in Richtung quer zu ihrer Längsrichtung abschnittsweise einklemmbar ist. Diese Klemmverbindung kann besonders einfach und damit kostengünstig realisiert werden und ist hinsichtlich ihrer Haltefunktion dennoch ausreichend sicher.

Die erfindungsgemäße Verteilereinrichtung weist eine erfindungsgemäße Erdungsvorrichtung und wenigstens einen an der Erdungsschiene der Erdungsvorrichtung angebrachten, erfindungsgemäßen Schutzstecker auf. Bevorzugt sind die Schutzstecker auswechselbar an der Erdungschiene angebracht, insbesondere durch eine wie oben beschriebene Klemmvorrichtung als Befestigungsteil des Anbringteils, mittels deren das Anbringen und Lösen von Schutzsteckern an bzw. von der Erdungsvorrichtung besonders schnell ausgeführt werden kann.

Die erfindungsgemäße Verteilereinrichtung hat eine langgestreckte Aufnahmevorrichtung, ein oder mehrere in der Aufnahmevorrichtung aufgenommene Funktionselement/e, wobei die Aufnahmevorrichtung derart ausgebildet ist, daß die Funktionselemente in einem Abstand voneinander aneinandergestapelt, insbesondere übereinanderliegend oder horizontal gestapelt, darin aufnehmbar sind. Das jeweilige Funktionselement hat einen langgestreckten Kontaktabschnitt, d.h. z.B. eine Kontaktleiste, mit Anschlußstellen zum Anschluß von ankommenden und abgehenden elektrischen Leitungen. Die Verteilereinrichtung hat ferner wenigstens eine erfindungsgemäße Erdungsvorrichtung, deren Erdungsschiene parallel zum langgestreckten Kontaktabschnitt des zugeordneten Funktionselements angeordnet ist und die mittels der zugehörigen Halteteile an Längsendabschnitten des Funktionselements angebracht ist; die Längsendabschnitte sind hier auf die Längsrichtung des Kontaktabschnitts bezogen. Die Verteilereinrichtung hat ferner wenigstens einen erfindungsgemäßen Schutzstecker, der derart an der Erdungsschiene angebracht ist, daß sich seine Kontaktzunge zur Kontaktierung der ihm zugeordneten elektrischen Leitungen in Richtung zu dem Funktionselement erstreckt.

Die Erdung wird dadurch komplettiert, daß die Kontaktfedern der jeweiligen Erdungsvorrichtung mit jeweils zugeordneten Erdungskontaktstellen elektrisch verbunden sind, welche an Masse angeschlossen sind. Hierzu ist bevorzugt einfach die gesamte Aufnahmevorrichtung aus leitendem Material, insbesondere aus Metall, wobei die Kontaktfedern der Erdungsschiene der Erdungsvorrichtung mit einem als Erdungskontaktstelle dienenden Abschnitt der Aufnahmevorrichtung in elektrischem Kontakt sind, um dadurch die Erdung zu komplettieren. Die Aufnahmevorrichtung kann aber auch mit einer separaten Erdungsleitung ausgestattet sein, die über jeweils zugehörige Erdungskontaktstellen mit den Kontaktfedern der Erdungschiene der jeweiligen Erdungsvorrichtung in elektrischer Verbindung sind.

Nach einer Ausführungsform der Erfindung ist die Erdungsschiene der jeweiligen Erdungsvorrichtung in Richtung längs der Aufnahmevorrichtung gegen das zugehörige Funktionselement versetzt angeordnet. Hierdurch bleiben die Zugänge zu den Anschlußstellen des jeweiligen Funktionselements für einen Bediener ausreichend zugänglich.

Nach einer weiteren Ausführungsform der Erfindung sind die Anschlußstellen längs des langgestreckten Kontaktabschnitts des jeweiligen Funktionselements angeordnet und aufgeteilt in eine Reihe von ersten Anschlußstellen für ankommende Leitungen und eine Reihe von zweiten Anschlußstellen für abgehende Leitungen. Die Erdungsschiene der zugeordneten Erdungsvorrichtung ist hierbei benachbart zu der Reihe zweiter Anschlußstellen auf deren von der Reihe erster Anschlußstellen abgewandten Seite angeordnet. Bei dieser Anordnung ist der zwischen den Reihen erster und zweiter Anschlußstellen zum Rangieren vorgesehene Zwischenraum nicht von der Erdungseinrichtung blockiert und damit bequem für einen Bediener zugänglich. Indem die Funktionselemente übereinander oder nebeneinander in der Aufnahmevorrichtung angeordnet sind, ist diese Versetzung der Erdungsschiene jedoch nur soweit zu wählen, daß die Erdungsschiene allenfalls noch die Reihe erster Anschlußstellen des darunter bzw. daneben angeordneten Funktionselements überdeckt, nicht aber den dann darunter bzw. daneben erneut folgenden Freiraum, insbesondere nicht die darauffolgende Reihe zweiter Anschlußstellen dieses Funktionselements. Denn dieser Freiraum soll für das Einstecken von Schutzsteckern zugänglich sein, und die jeweiligen Reihen zweiter Anschlußstellen (Rangierseite) müssen für das Rangieren zugänglich sein.

Nach einer Ausführungsform der Erfindung ist die Aufnahmevorrichtung in Form einer langgestreckten, elektrisch leitenden Aufnahmewanne mit einem Wannenboden und zwei Wannenschenkeln ausgebildet. Die Aufnahmewanne ist bevorzugt aus Metallmaterial. In den Wannenschenkeln sind langgestreckte Aufnahmezungen ausgebildet, die sich mit ihrer Längsrichtung parallel zur Erstreckungsrichtung der Schenkel und damit senkrecht zur Längsrichtung der Wanne erstrecken. Zwischen die Aufnahmezungen, das heißt zwischen jeweils zwei Aufnahmezungen, ist das jeweilige Funktionselement eingesetzt, wobei die Kontaktfedern der am jeweiligen Funktionselement angebrachten Erdungsvorrichtung die Aufnahmezungen zur Herstellung eines elektrischen Kontakts federnd kontaktiert.

Durch die Kontaktfedern wird in sicherer Weise ein Ein-Punkt-Erdungskontakt hergestellt, welcher einen geringen Leitungsverlust aufweist. Die Halterung der Erdungsvorrichtung am Funktionselement wird im wesentlichen von den beiden Halteteilen übernommen, wobei von der Kontaktfeder hierbei aber vorteilhaft eine Fixierfunktion übernommen wird, welche unter Beibehaltung des Ein-Punkt-Kontakts möglich ist.

Um eine verbesserte Fixierwirkung mittels der Kontaktfedern zu erzielen, sind diese bevorzugt an ihrem freien Endabschnitt jeweils mit einem Eingriffsteil versehen, welches mit einem korrespondierenden Gegenstück, das am jeweiligen, zugeordneten Funktionselement vorgesehen ist, im Eingriff steht, um die Erdungsvorrichtung am Funktionselement zu fixieren. Das jeweilige Eingriffsteil kann zum Beispiel einfach in Form eines von der Kontaktfeder ausgebildeten Vorsprungs vorgesehen sein, welcher in eine im Funktionselement ausgebildete Aussparung eingreifen kann, oder eine Aussparung sein, in welche ein am Funktionselement ausgebildeter Vorsprung eingreifen kann.

Im Falle daß die Halteteile der jeweiligen Erdungsvorrichtung mit einem in Richtung des Funktionselements (Steckrichtung) weisenden Haltestück, wie z.B. einem Haltezapfen, vorgesehen sind, welcher in eine korrespondierende Öffnung im Funktionselement eingreift, und sich die Kontaktfedern parallel zu diesem Haltestück erstrecken und mit ihrem Eingriffsteil mit einem korrespondierenden Gegenstück im Eingriff sind, dann wird die Erdungsvorrichtung von der Haltestück-Gegenstück-Verbindung in einer Richtung quer zur Haltestückrichtung fixiert. Von den im Eingriff stehenden Kontaktfedern wird hierbei verhindert, daß das Haltestück in seiner Längsrichtung bzw. Steckrichtung gesehen aus dem im Funktionselement ausgebildeten Gegenstück gelangt. Das heißt, die Kontaktfedern fixieren die Erdungsvorrichtung in deren Steckrichtung. Die Kontaktfedern erstrecken sich bevorzugt eng benachbart an den jeweiligen Halteteilen und deren Haltestück vorbei, so daß eine besonders kompakte Halterung erzielt wird.

Eine Handhabungsvorrichtung zum Montieren einer erfindungsgemäßen Erdungsvorrichtung hat einen kastenförmigen, langgestreckten Grundkörper, in welchem eine in seiner Längsrichtung verlaufende Nut vorgesehen ist, die nach außen hin offen ist und in welcher eine Erdungsschiene der Erdungsvorrichtung mit geringfügigem Spiel einsetzbar ist. Der Grundkörper hat am jeweiligen Längsendabschnitt einen seitlichen Anschlag, von welchem eine Erdungsvorrichtung, die mit ihrer Erdungsschiene in die Nut eingesetzt ist, längsseitig mit geringfügigem Spiel einfaßbar und damit bezüglich der Handhabungsvorrichtung zentrierbar ist. Die Nut ist vorteilhaft im wesentlichen genauso lang wie die darin aufzunehmende Erdungsschiene.

Mittels der Handhabungsvorrichtung kann eine Erdungsvorrichtung einfach und sicher ergriffen werden und ist damit schneller an ein Funktionselement der Verteilereinrichtung anbaubar.

Um das Anmontieren der Erdungsvorrichtung noch weiter zu erleichtern, hat der Grundkörper vorteilhaft wenigstens eine Führungszunge, die sich quer zur Längsrichtung der Nut sowie in Richtung der Nutöffnung nach vorne erstreckt und die eine gerade Seitenfläche zum Entlangstreifen an einer korrespondierenden Führungsfläche eines Funktionselements aufweist. Somit muß ein Bediener lediglich die Führungszunge mit ihrer geraden Seitenfläche an der korrespondierenden Führungsfläche ansetzen und die Handhabungsvorrichtung zusammen mit der darin eingesetzten Erdungsvorrichtung mit der Seitenfläche entlang der Führungsfläche entlangstreifen, um die Erdungsvorrichtung exakt an einem Funktionselement anzusetzen und anzumontieren. Hierdurch sind Verkantungen und sonstige Ansetzfehler, die zu einer Beschädigung der Teile führen könnten, weitgehend vermieden.

Bevorzugt sind zwei Führungszungen vorgesehen, die bezüglich der Längsrichtung des Grundkörpers in einem Abstand voneinander angeordnet sind und deren gerade Seitenfläche von ihrer seitlichen Stirnfläche gebildet wird. Vorteilhaft sind die beiden geraden Seitenflächen entweder einander zugewandt oder insbesondere voneinander abgewandt, so daß die an die korrespondierenden Führungsflächen angelegten Führungszungen seitlich fixiert geführt sind und damit seitlich nicht mehr aus ihrer gewünschten Führungsbahn herausgleiten können.

Die Führungszungen sind hierbei bevorzugt auch oben und unten gegen korrespondierende Führungsflächen angelegt, so daß auch diesbezüglich keine ungewollten Verschiebungen möglich sind.

Bei in die Handhabungsvorrichtung eingesetzter Erdungsvorrichtung erstrecken sich die Führungszungen bevorzugt benachbart sowie parallel zu den, Kontaktfedern und bevorzugt gleichzeitig auch benachbart und parallel zu den Halteteilen, insbesondere zu deren Haltestücken, so daß diese zu befestigenden und zu kontaktierenden Teile der Erdungsvorrichtung nahe an den als Führungselemente dienenden Führungszungen angeordnet sind, um insbesondere für diese Teile durch Spiel verursachte Abweichungen vom gewünschten Bewegungsweg möglichst gering zu halten.

Nach einer Ausführungsform der Erfindung hat der Grundkörper eine obere und eine untere Begrenzungswand sowie zwei Stirnwände und eine längsseitige Begrenzungswand, wobei er an einer Längsseite offen ist. Die Nut ist hierbei im wesentlichen in dieselbe Richtung hin offen wie die offene Längsseite des Grundkörpers. Diese Ausbildung hat den Vorteil, daß die Teile der Erdungsvorrichtung bei Bedarf problemlos teilweise im kastenförmigen Grundkörper untergebracht werden können, da die Erdungsvorrichtung genau auf jener Seite der Handhabungsvorrichtung in die Nut eingesetzt wird, auf der auch der Grundkörper offen ist. In der oberen und in der unteren Begrenzungswand des Grundkörpers können ferner auch Aussparungen vorgesehen sein, in denen je nach Gestaltung der unterzubringenden Erdungsvorrichtung Bestandteile derselben aufgenommen sind, falls sie in die Handhabungsvorrichtung eingesetzt ist.

Die seitlichen Anschläge werden bevorzugt von den beiden Stirnwänden des Grundkörpers gebildet, wodurch zusätzliche Anschlagsstücke vermieden sind.

Die jeweilige Führungszunge ist bevorzugt aus der oberen Begrenzungswand des Grundkörpers ausgeformt, und die Nut ist vorteilhaft in der unteren Begrenzungswand des Grundkörpers ausgeformt.

Hierdurch werden zusätzliche Bauteile vermieden, wodurch für die Handhabungsvorrichtung eine sehr kompakte und damit kostengünstige Gestaltung erreicht ist. Die bezüglich der Höhenrichtung des Grundkörpers versetzte Anordnung der Führungszungen von der Aufnahmenut ist besonders bevorzugt bei einer entsprechenden Versetzung der Erdungsschiene und der Haltestücke der Erdungsvorrichtung.

Die Erfindung wird im folgenden anhand bevorzugter Ausführungsformen mit Bezugnahme auf die Zeichnung erläutert. In der Zeichnung zeigen:
Figur 1 eine Verteilereinrichtung mit einer Erdungseinrichtung nach einer Ausführungsform der Erfindung in perspektivischer Darstellung seitlich von oben,
Figur 2 die in Figur 1 dargestellte Verteilereinrichtung in einer perspektivischen Ansicht seitlich von unten,
Figur 3 die erfindungsgemäße Verteilereinrichtung von der Seite,
Figur 4 eine Schnittansicht längs der in Figur 3 dargestellten Verteilereinrichtung in vergrößerter Darstellung,
Figuren 5 und 6 die erfindungsgemäße Erdungsvorrichtung in einer perspektivischen Ansicht seitlich von oben bzw. seitlich von unten,
Figur 7 einen Schutzstecker in einer perspektivischer Darstellung seitlich von unten,
Figur 8 den in Figur 7 dargestellten Schutzstecker bei abgenommener Schutzabdeckung,
Figur 9 den in Figur 8 dargestellten Schutzstecker aus einer Blickrichtung seitlich von oben,
Figur 10 einen vergrößerten Abschnitt des in Figur 8 dargestellten Schutzsteckers in einer Seitenansicht,
Figur 11 ein Anbringteil des erfindungsgemäßen Schutzsteckers in perspektivischer Darstellung seitlich von unten,
Figur 12 das in Figur 11 gezeigte Anbringteil in perspektivischer Darstellung seitlich von oben,
Figuren 13 bis 16 eine Handhabungsvorrichtung, mit darin eingesetzter Erdungsvorrichtung in unterschiedlichen perspektivischen Ansichten,
Figur 17 die Handhabungsvorrichtung nach Figuren 13 bis 16 in perspektivischer Darstellung ohne eingesetzte Erdungsvorrichtung,
Figuren 18 bis 21 Explosionsdarstellungen, anhand derer das Einsetzen einer erfindungsgemäßen Erdungsvorrichtung in eine erfindungsgemäße Handhabungsvorrichtung aus unterschiedlichen Blickrichtungen perspektivisch aufgezeigt ist,
Figur 22 eine Explosionsdarstellung, mittels welcher das Anmontieren einer Erdungsvorrichtung an eine

Verteilereinrichtung mittels einer Handhabungsvorrichtung in einer perspektivischen Ansicht seitlich von oben aufgezeigt ist, und

Figur 23 eine der in Figur 22 gezeigten Darstellung entsprechende Darstellung aus einer Blickrichtung seitlich von unten.

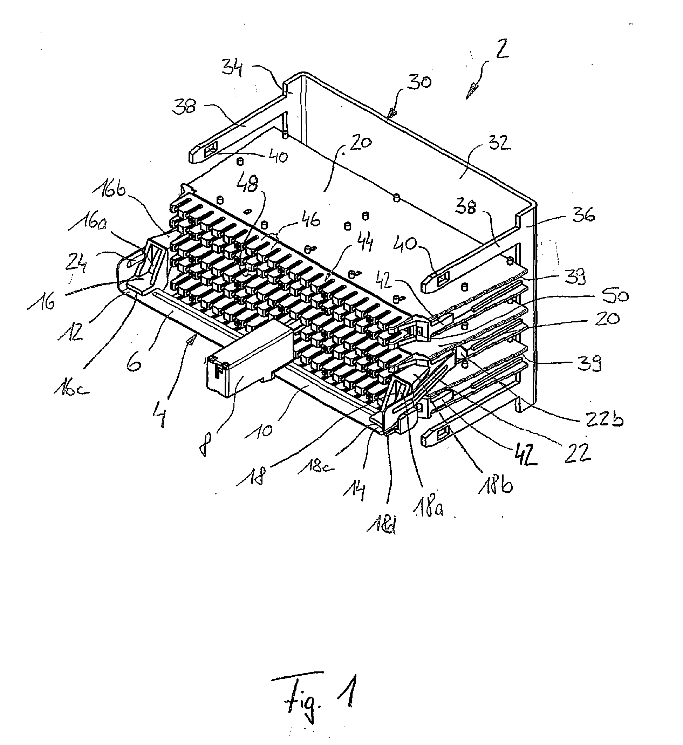

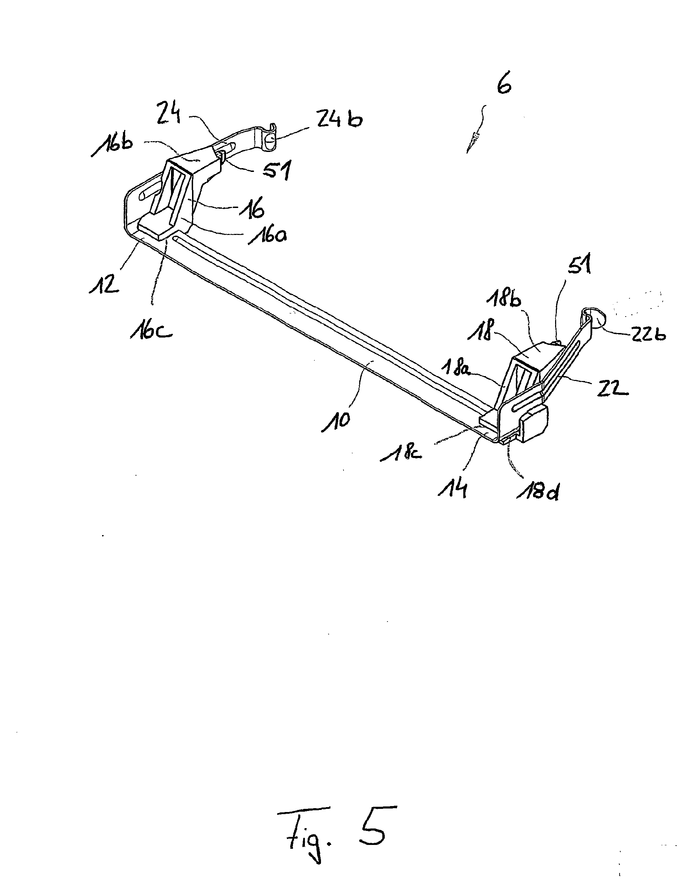

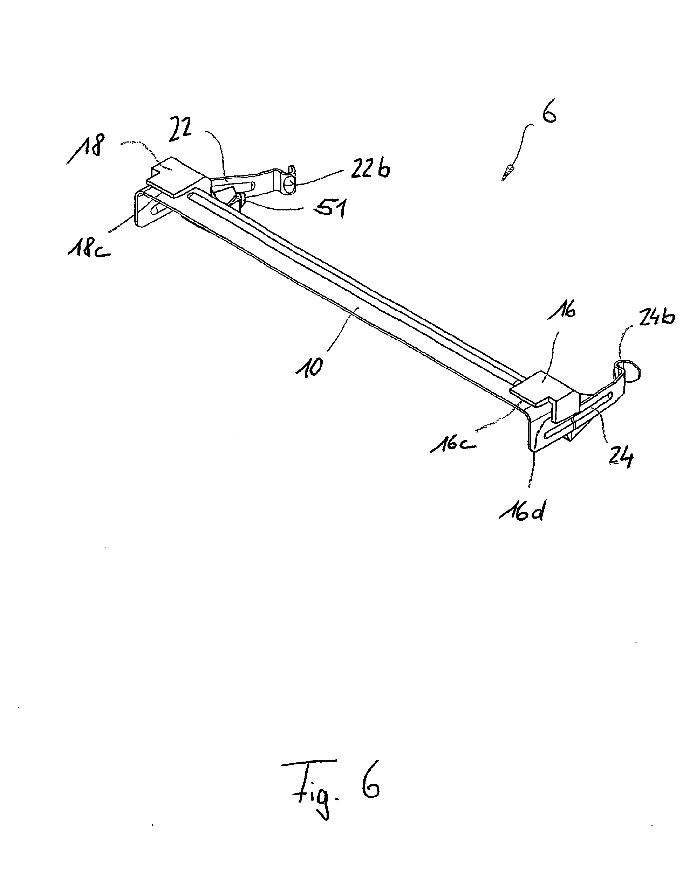

In Figuren 1 bis 4 ist eine erfindungsgemäße Verteilereinrichtung 2 abschnittsweise dargestellt. Die Verteilereinrichtung 2 hat eine erfindungsgemäße Erdungseinrichtung 4 mit einer Erdungsvorrichtung 6 und einem Schutzstecker 8 gemäß einer Ausführungsform der Erfindung. In Figuren 5 und 6 ist die Erdungsvorrichtung 6 in jeweils einer perspektivischen Ansicht separat dargestellt.

Die Erdungsvorrichtung 6 nach dieser Ausführungsform hat eine langgestreckte, flach ausgebildete Erdungsschiene 10, die hier als Metallschiene aus einfachem Biegeblech vorgesehen ist. An ihren beiden Längsendabschnitten 12, 14 hat die Erdungsvorrichtung 6 jeweils ein Halteteil 16, 18, welches hier als winkelförmiges Kunststoffteil vorgesehen ist, das einen ersten Schenkel 16a, 18a und einen zweiten Schenkel 16b, 18b (siehe z.B. Figur 1) aufweist.

Am freien Ende des einen Schenkels 16a, 18a des jeweiligen Halteteils 16, 18 ist ein Aufnahmeschlitz 16c, 18c ausgebildet, in den die Erdungsschiene 10 eingesetzt ist. Der eine Schenkel 16a, 18a des jeweiligen Halteteils 16, 18 erstreckt sich ausgehend von der Erdungsschiene 10 im wesentlichen senkrecht zu deren Längsrichtung nach oben, und der andere Schenkel 16b, 18b des jeweiligen Halteteils 16, 18 erstreckt sich im wesentlichen senkrecht zur Längsrichtung der Erdungsschiene 10 nach vorne in Richtung eines der Erdungsvorrichtung 6 zugeordneten Funktionselements 20, das zusammen mit anderen, entsprechend ausgebildeten Funktionselementen 20, wie später noch detaillierter erläutert, in der Verteilereinrichtung 2 angeordnet ist.

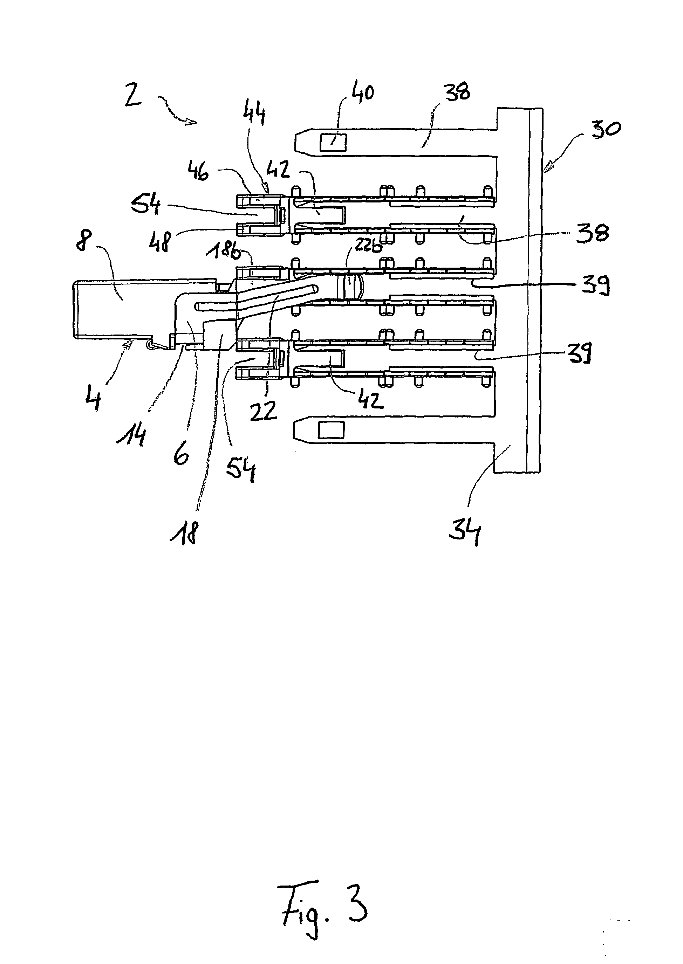

Die Erdungsschiene 10 ist als langgestreckte, flache Platte vorgesehen, welche zur Versteifung mit langgestreckten Sicken versehen ist. An ihren Längsendabschnitten 12, 14 ist die Erdungsschiene 10 mit langgestreckten, zungenförmigen Kontaktfedern 22, 24 versehen, welche hier stofflich einstückig mit der Erdungsschiene 10 ausgebildet sind, und zwar indem die Erdungsschiene 10 an ihren Längsendabschnitten 12, 14 zunächst nach oben abgebogen ist und sich von dort aus unter Ausbildung der jeweiligen Kontaktfeder 22, 24 mit einem schmalen Streifen nach vorne erstreckt. Damit hat die jeweilige Kontaktfeder 22, 24 eine dem Winkelverlauf des jeweiligen Halteteils 16, 18 folgenden winkelförmigen Verlauf (siehe insbesondere Figur 3), wobei sich die Kontaktfedern 22, 24 letztlich im wesentlichen parallel zum zugeordneten anderen Schenkel 16b, 18b des jeweiligen Halteteils 16, 18 nach vorne erstrecken.

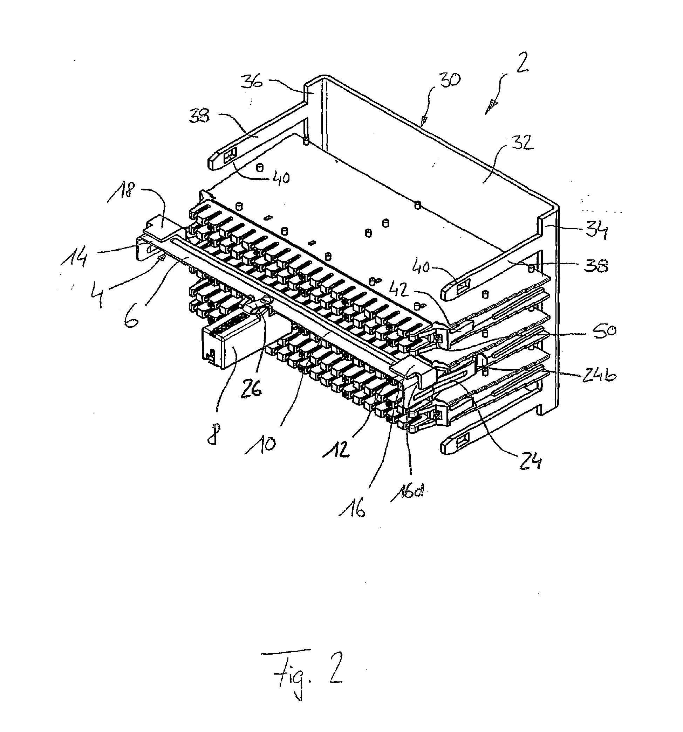

Die Kontaktfedern 22, 24 sind jeweils seitlich außen am zugehörigen Halteteil 16, 18 vorbeigeführt, wobei das jeweilige Halteteil 16, 18 seitlich außen einen Aufnahmeschlitz 16d, 18d aufweist; in welchem der Fuß der jeweiligen Kontaktfeder 22, 24 aufgenommen ist (siehe z.B. Figuren 1 und 2). Nach dieser Ausführungsform sind auch die Kontaktfedern 22, 24 mit jeweils einer Verstärkungssicke vorgesehen. Die beiden Kontaktfedern 22, 24 sind ferner jeweils aufeinanderzu, das heißt nach innen, abgebogen (siehe z.B. Figur 1) und können federelastisch nach außen auseinandergespreizt werden.

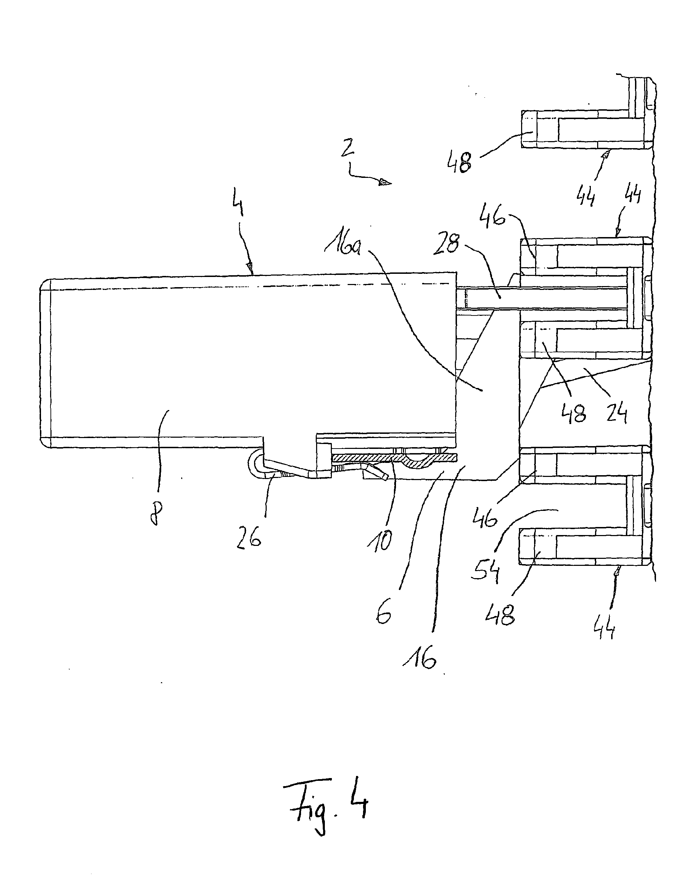

Auf die Erdungsschiene 10 ist, wie später im Detail erläutert, ein Schutzstecker 8 aufgesteckt. Je nach Bedarf können neben dem gezeigten Schutzstecker 8 noch zusätzliche Schutzstecker 8 auf die Erdungsschiene 10 aufgesteckt werden, und zwar nach dieser Ausführungsform bis maximal zehn Schutzstecker 8. Zum Aufstecken des jeweiligen Schutzsteckers 8 auf die Erdungsschiene 10 weist dieser ein wie z.B. aus Figur 4 ersichtliches, klammerförmiges Anbringteil 26 auf, das als Haltevorrichtung dient und mittels dessen der Schutzstecker 8 auf die Erdungsschiene 10 aufgeklemmt ist.

Der Schutzstecker 8 hat ferner eine sich nach vorne erstreckende Kontaktzunge 28 (siehe zum Beispiel Figur 4), von welcher, wie später noch detaillierter erläutert, in der Verteilereinrichtung 2 vorgesehene elektrische Leitungen kontaktierbar sind. Das klammerförmige Anbringteil 26 ist aus Metallmaterial und damit elektrisch leitend. Es leitet, im Falle daß zwischen den von der Kontaktzunge 28 kontaktierten Leitungsadern eine Überspannung vorliegt, einen zugehörigen Überspannungsstrom an die Erdungsschiene 10 ab.

Die Verteilereinrichtung 2 hat ferner eine Aufnahmevorrichtung 30, welche eine Wannenform mit einem Wannenboden 32 und zwei sich senkrecht in dieselbe Richtung von dem Wannenboden 32 aus erstreckende Wannenschenkel 34, 36 aufweist. In den Wannenschenkeln 34, 36 sind langgestreckte Aufnahmezungen 38 ausgeformt, welche sich in die Erstreckungsrichtung der Wannenschenkel 34, 36 erstrecken und welche paarweise einander gegenüberliegend angeordnet sind. Am freien Endabschnitt der jeweiligen Aufnahmezunge 38 ist eine Aussparung 40 ausgebildet, in welche ein Eingriffsteil eines Funktionselements 20 eingreifen kann.

Die Funktionselemente 20 sind hier als plattenförmige Teile ausgebildet, die insbesondere aus nichtleitendem Material, insbesondere aus Kunststoffmaterial, hergestellt sind. Die plattenförmigen Funktionselemente 20 sind langgestreckt, wobei die Länge der Funktionselemente 20 in etwa der Breite der Aufnahmevorrichtung 30 entspricht. An ihren Stirnseiten sind die Funktionselemente 20 derart mit Längsnuten 39 versehen, daß sie an beiden Längsendabschnitten derart zwischen zwei Aufnahmezungen 38 der Aufnahmevorrichtung 30 einschiebbar sind, daß die Aufnahmezungen 38 in die stirnseitigen Längsnuten des Funktionselementes 20 eingreifen können.

Die Funktionselemente 20 haben ferner an ihrem bezüglich ihrer Einschieberichtung von der Aufnahmevorrichtung 30 abgewandten Ende der jeweiligen Längsnut 39 einen Eingriffsvorsprung, der bei vollständig zwischen zwei Aufnahmezungen 38 eingeschobenem Funktionselement 20 in die am freien Ende der jeweiligen Aufnahmezunge 38 ausgebildete Aussparung 40 zur Fixierung des Funktionselements 20 eingreift. Der Eingriffsvorsprung ist an einem federelastischen nach außen ausbiegbaren Eingriffsarm 42 angebracht, welcher zum Herausnehmen des Funktionselements 20 nach außen ausgebogen wird, um den Eingriffsvorsprung aus der Aussparung 40 zu nehmen.

Damit sind in der Aufnahmevorrichtung 30 entsprechend der Anzahl von paarweise gegenüberliegend angeordneten Aufnahmezungen 38 eine entsprechende Anzahl von Funktionselementen 20 übereinanderliegend aneinandergestapelt aufnehmbar.

Das jeweilige Funktionselement 20 weist an seiner vom Wannenboden 30 abgewandten Längsseite einen langgestreckten Kontaktabschnitt 44 in Form einer Kontaktleiste mit einer Mehrzahl von ersten Anschlußstellen 46 für ankommende Leitungen und einer Mehrzahl von zweiten Anschlußstellen 48 für abgehende Leitungen auf. Die für die ankommenden Leitungen vorgesehenen ersten Anschlußstellen 46 erstrecken sich in Längsrichtung des Kontaktabschnitts 44 an der Oberseite des Funktionselements 20 in einer Reihe, und die Anschlußstellen 48 für die abgehenden Leitungen erstrecken sich parallel zu den ersten Anschlußstellen 46 ebenfalls entlang des Kontaktabschnitts 44 in einer Reihe. Hinsichtlich der übereinanderliegend angeordneten Funktionselemente 20 ist bei jedem Funktionselement 20 die Reihe erster Anschlußstellen 46 über der Reihe zweiter Anschlußstellen 48 angeordnet.

Nach dieser Ausführungsform sind jeweils zehn erste Anschlußstellen 46 und zehn zweite Anschlußstellen 48 vorgesehen, wobei jede Anschlußstelle 46, 48 eine Doppelkontaktstelle zum Anschluß von jeweils zwei Leitungsdrähten oder -adern einer Doppeladerleitung aufweist. Damit sind also insgesamt zwanzig Anschluß-Kontaktstellen für die ankommenden Doppeladerleitungen und zwanzig Anschluß-Kontaktstellen für die abgehenden Doppeladerleitungen pro Funktionselement 20 vorgesehen. Die nicht dargestellten Leitungen werden seitlich in das jeweilige Funktionselement 20 eingeführt und dort mit ihren Leitungsadern entlang von Aderführungen an die einzelnen Anschluß-Kontaktstellen der Anschlußstellen 46, 48 herangeführt und elektrisch angeschlossen.

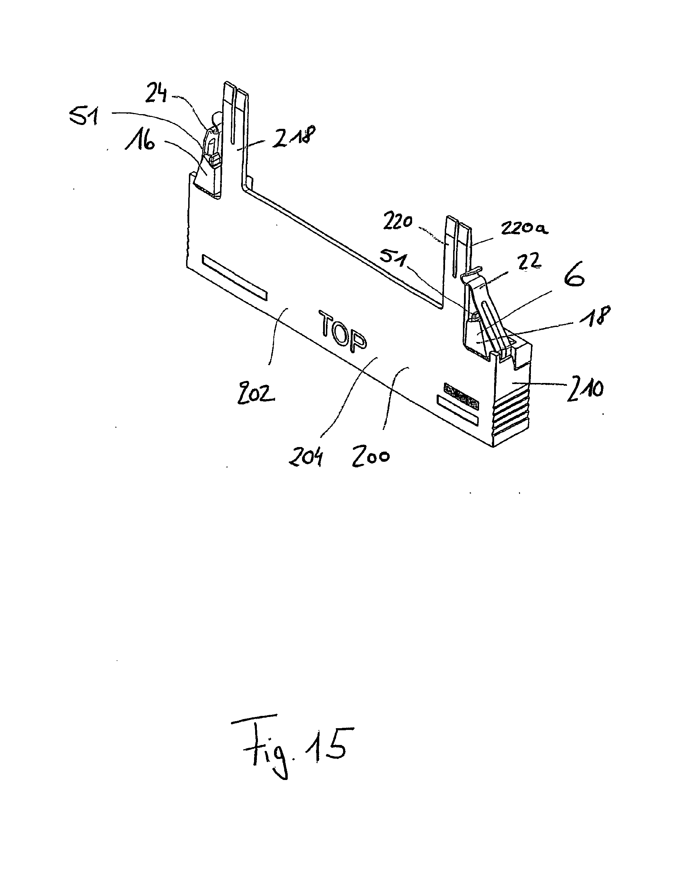

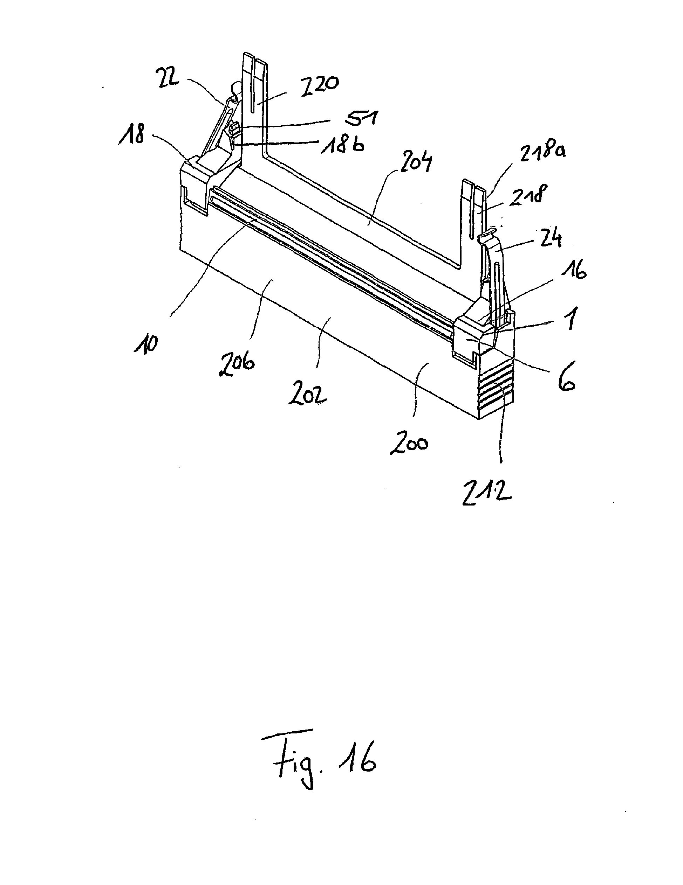

Am jeweiligen Längsendabschnitt des langgestreckten Kontaktabschnitts 44 des jeweiligen Funktionselements 20 ist eine Aufnahmeaussparung 50 (siehe z.B. Figuren 1 und 2) ausgebildet, in welche ein Haltestück 51 in Form eines Eingriffszapfens (siehe z.B. Figuren 5 und 6 oder auch Figuren 15 und 16) eingreift. Das Haltestück 51 ist am jeweils anderen Schenkel 16b, 18b des jeweiligen Halteteils 16, 18 ausgebildet (siehe z.B. Figuren 5 und 6). Die Erdungsvorrichtung 6 ist über diese Stiftverbindung in einer Richtung längs der Aufnahmevorrichtung 30 und quer zur Erdungsschiene 10 gehalten und fixiert.

Die jeweilige Kontaktfeder 22, 24 ist an ihrem freien Ende 22b, 24b mit einem nach innen weisenden Vorsprung versehen, welcher, falls die Erdungsvorrichtung 6 mit dem Haltestück 51 des jeweiligen Halteteils 16, 18 in die zugehörige Aufnahmeaussparung 50 des zugehörigen Funktionselements 20 eingesetzt ist, den seitlich nach außen leicht vorstehenden Eingriffsarm 42 des zugehörigen Funktionselements 20 hintergreift. Hierdurch ist die Erdungsvorrichtung 6 auch in Richtung parallel zu ihrer Einsetzrichtung und hier parallel zum jeweils anderen Winkelschenkel 16b, 18b und den Kontaktfedern 22, 24 sowie ebenfalls parallel zu den Aufnahmezungen 38 axial gesichert fixiert. Gleichzeitig wird hierbei von dem Vorsprung der Kontaktfedern 22, 24 die jeweils zugehörige Aufnahmezunge 38 der elektrisch leitenden Aufnahmevorrichtung 30 der Verteilereinrichtung federnd kontaktiert, wodurch die Erdungsschiene 10 auf Erdpotential gelegt ist.

Ein jeweiliger Schutzstecker 8 ist jeweils einer ersten Anschlußstelle 46 und einer zugehörigen zweiten Anschlußstelle 48, die einer jeweiligen ersten Anschlußstelle 46 gegenüberliegend angeordnet ist, zugeordnet. Die Kontaktzunge 28 des jeweiligen Schutzsteckers 8 erstreckt sich hierbei zwischen den beiden Reihen von Anschlußstellen 46, 48 hindurch (siehe z.B. Figur 4), um, wie weiter unten im Detail erläutert, pro erster Anschlußstelle 46 die beiden zugehörigen Leitungsadern einer daran angeschlossenen elektrischen Leitung und pro zugehöriger zweiter Anschlußstelle 48 die beiden zugehörigen Leitungsadern einer hieran angeschlossenen elektrischen Leitung zu kontaktieren.

Indem, wie insbesondere aus Figur 4 ersichtlich ist, die Erdungsschiene 10 gegenüber dem jeweils zugehörigen Funktionselement 20 in Längsrichtung der Aufnahmevorrichtung 30 nach unten versetzt angeordnet ist, ist der Zwischenraum 54 zwischen den oberen Anschlußstellen 46 und den unteren Anschlußstellen 48 pro Funktionselement 20 und insbesondere die jeweilige Reihe unterer Anschlußstellen 48 (Rangierseite) problemlos für einen Bediener zum Rangieren von Leitungsdrähten/Leitungsadern zugänglich.

Nach dieser Ausführungsform ist die Erdungsschiene 10 gegen das jeweils zugehörige Funktionselement 20 derart weit nach unten versetzt angeordnet, daß die Erdungsschiene 10 in etwa gerade auf Höhe der oberen Anschlußstellen 46 des nächstfolgenden unteren Funktionselements 20 angeordnet ist (siehe z.B. Figur 4), um dessen Zwischenraum 54 zwischen seinen oberen Anschlußstellen 46 und unteren Anschlußstellen 48 und insbesondere dessen untere Anschlußstellen 48 (Rangierseite) ebenfalls nicht zu versperren. Die Versetzung der Erdungsschiene 10 nach unten ist ebenfalls derart groß gewählt, daß ein zugehöriger Schutzstecker 8 problemlos in dem durch die Versetzung oberhalb der jeweiligen Erdungsschiene 10 geschaffenen Freiraum untergebracht werden kann.

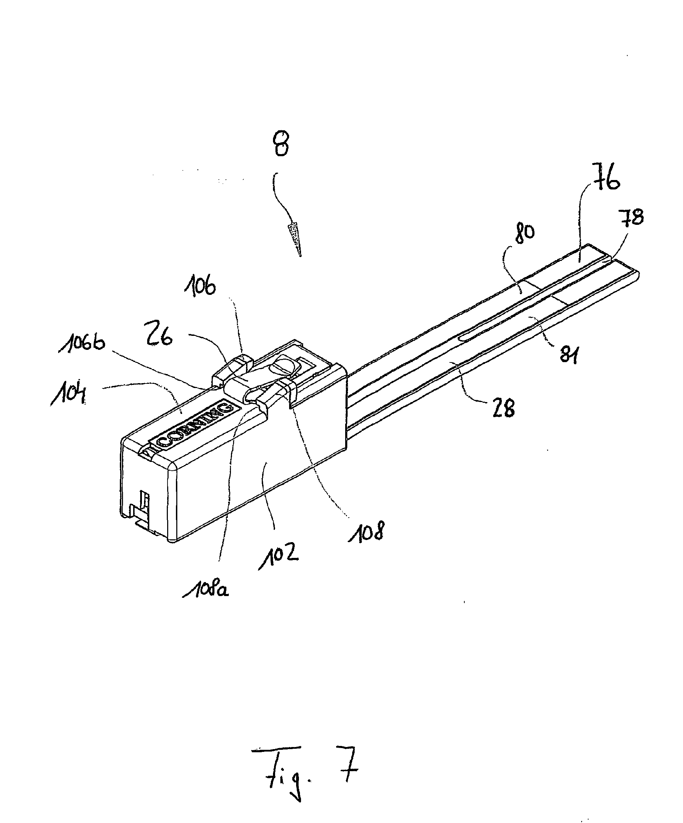

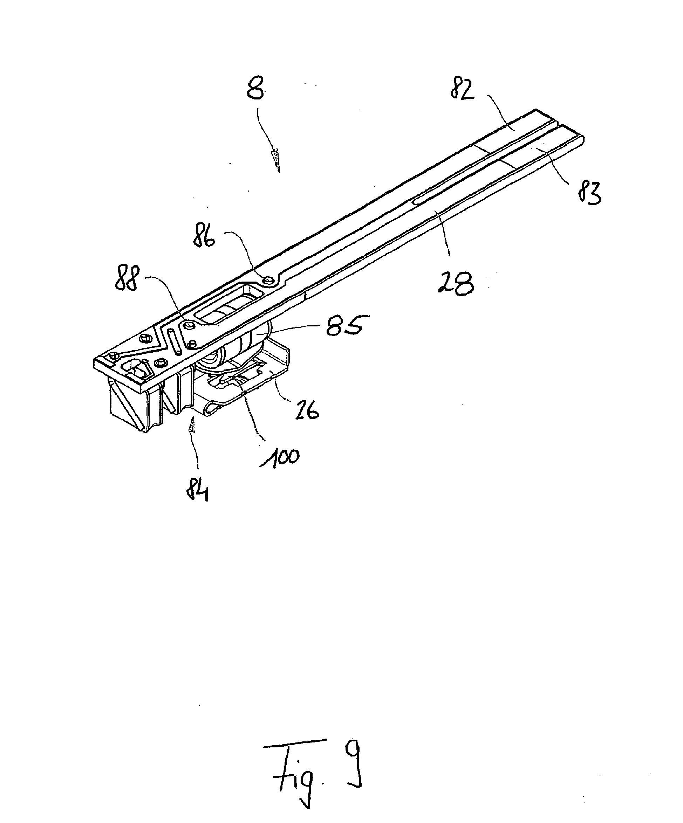

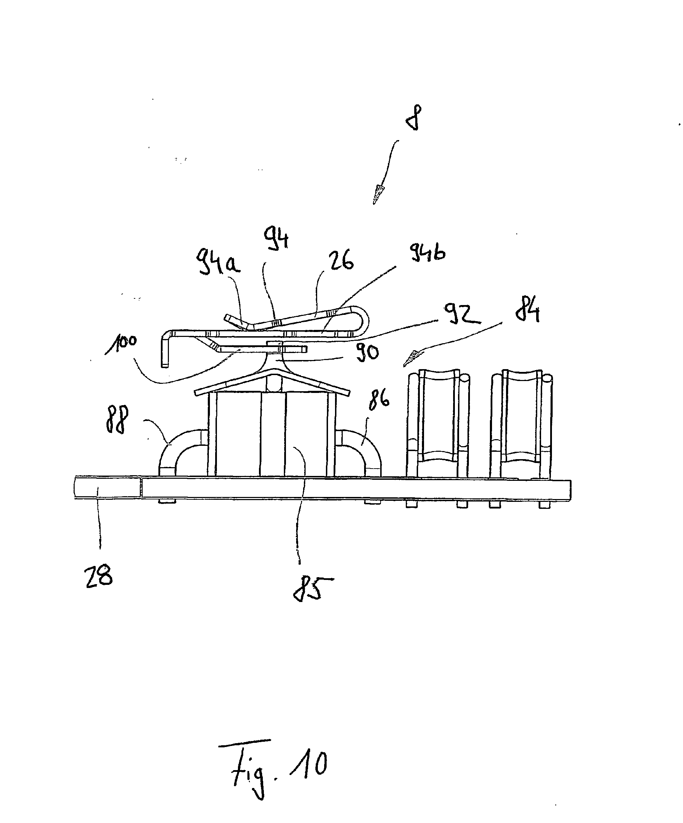

Gemäß Figuren 7 bis 10 hat ein Schutzstecker 8 eine flach ausgebildete, langgestreckte Kontak/tzunge 28, die an ihrem freien Ende 76 mit einem längsmittigen Spalt 78 versehen ist und auf welcher beidseitig je zwei separate Leiterbahnen 80, 81, 82, 83 ausgebildet sind, welche jeweils eine zugehörige Leitungsader einer an einer ersten Anschlußstelle 46 und einer zugehörigen, an einer zweiten Anschlußstelle 48 der Verteilereinrichtung 2 angeschlossenen Doppelader-Leitung kontaktieren, falls der Schutzstecker 8 über seine zugehörige Erdungseinrichtung 4 an eine Verteilereinrichtung 2 angeschlossen ist.

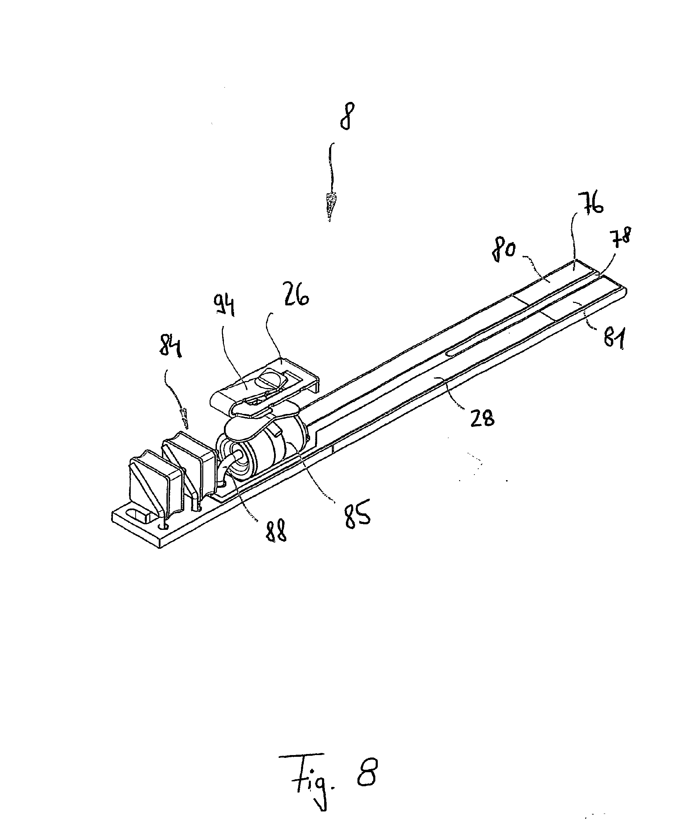

Wie insbesondere aus Figuren 8 bis 10 ersichtlich ist, ist am anderen Ende der Kontaktzunge 28 eine Überspannungs/Überstrom-Schutzeinrichtung 84 angeordnet, welche einen Ableiter 85 mit einer ersten Elektrode 86, einer zweiten Elektrode 88 und einer dritten Elektrode 90 umfaßt. Die erste Elektrode 86 und die zweite Elektrode 88 sind jeweils unmittelbar mit jenen jeweiligen Leiterbahnen 82, 83 elektrisch verbunden, die für den Kontakt mit den jeweiligen Leitungsadern jener Leitung vorgesehen sind, die an eine erste Anschlußstelle 46 angeschlossen ist (ankommende Leitung). Die beiden verbleibenden Leiterbahnen 80, 81 auf der anderen Seite der Kontaktzunge 28, die für den Kontakt mit den jeweiligen *Leitungsadern* jener Leitung vorgesehen sind, die an die zugehörige zweite Anschlußstelle 48 angeschlossen ist (abgehende Leitung), sind über die Überspannungs/Überstrom-Schutzeinrichtung 84 mit den Leiterbahnen 82, 83 verbunden. Die dritte Elektrode 90 ist im Normalbetrieb nicht mit der ersten Elektrode 86 und der zweiten Elektrode 88 in elektrischem Kontakt. Im Falle daß zwischen den beiden an die jeweilige Leiterbahn 82, 83 angeschlossenen Leitungsadern der ankommenden Leitung eine Überspannung vorliegt, entsteht über den Ableiter 85 ein derartiger elektrischer Kontakt zwischen den drei Elektroden 86, 88, 90, daß ein zugehöriger Überspannungsstrom an die dritte Elektrode 90 abgeleitet wird. Der Überspannungsstrom wird dann über die dritte Elektrode 90 an die Erdungsschiene 10 weitergeleitet, so daß die dritte Elektrode 90 als Erdungs-Elektrode dient.

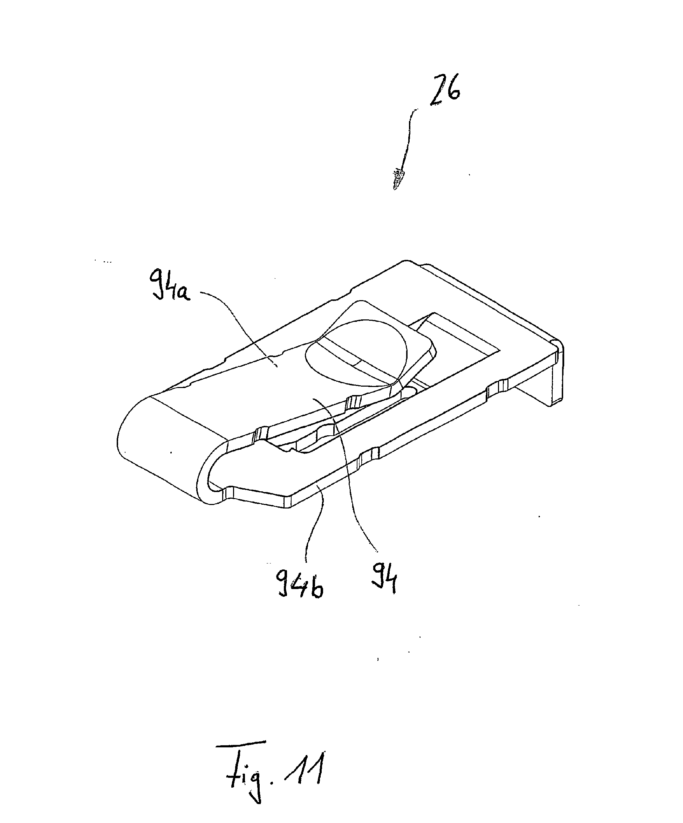

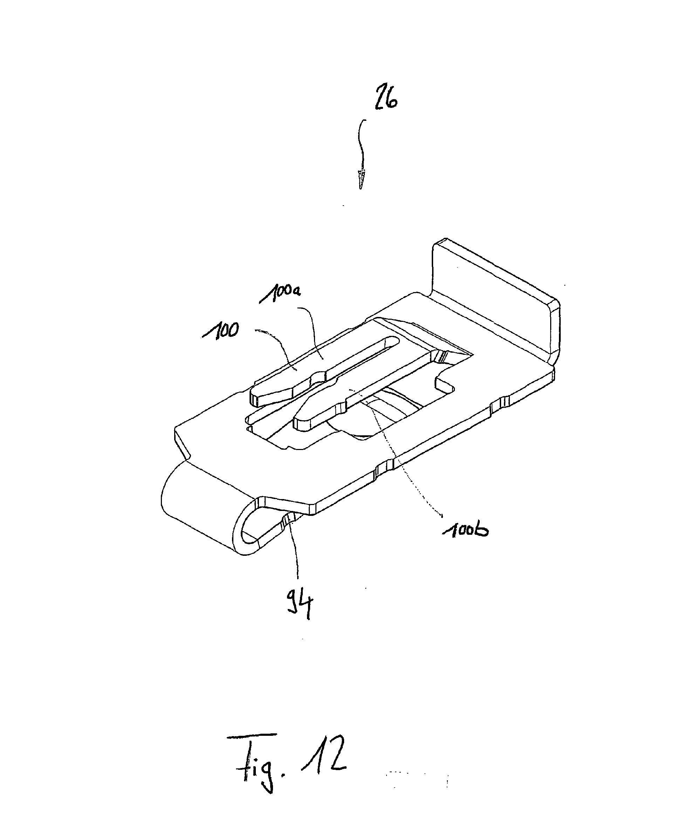

Zur Weiterleitung eines solchen Überspannungsstroms an die Erdungsschiene 10 der zugehörigen Erdungsvorrichtung 6 sowie zur gleichzeitigen Anbringung des Schutzsteckers 8 an dieser Erdungsschiene 10 weist der Schutzstecker 8 nach dieser Ausführungsform ein als Haltevorrichtung dienendes Anbringteil 26 auf, welches in den Figuren 11 und 12 vergrößert dargestellt ist. Das Anbringteil 26 ist aus einem leitenden Material, insbesondere aus Metall, und hat an seiner Unterseite eine Schneidklemme 100, mittels welcher das Anbringteil 26 an die dritte Elektrode 90 geklemmt ist, welche hierzu einen stabförmigen Ansatz 92 aufweist. Auf seiner von der Überspannungs/Überstrom-Schutzeinrichtung 84 und der Kontaktzunge 28 abgewandten Seite ist das Anbringteil 26 mit einem Befestigungsteil 94 versehen, welches hier in Form einer zweischenkeligen Klammer ausgebildet ist. Die Klammerschenkel 100a, 100b des Befestigungsteils 94 sind in Richtung senkrecht zur Längserstreckung der Kontaktzunge 28 ausbiegbar, so daß die Erdungsschiene 10 zur Befestigung des Schutzsteckers 8 zwischen ihnen einklemmbar ist. Die beiden Klemmschenkel 100a, 100b der Schneidklemme 100 sind demgegenüber parallel zur Fläche der Kontaktzunge 28 auseinanderspreizbar.

Das Anbringteil 26 ist in diesem Fall aus einem plattenförmigen Metallblech hergestellt, wobei die Schneidklemme 100 aus der zugehörigen Plattenfläche teilweise ausgestanzt und nach unten abgebogen ist, wobei der obere Klemmschenkel 94a des Befestigungsteils 94 von einem nach oben und nach hinten um 180° umgebogenen Plattenabschnitt gebildet ist, und wobei der untere Klemmschenkel 94b des Befestigungsteils 94 von dem verbleibenden Plattenabschnitt gebildet ist.

Über die Überspannungs/Überstrom-Schutzeinrichtung 84 und den zugehörigen Endabschnitt der Kontaktzunge 28 kann, wie aus Figur 7 ersichtlich ist, eine gehäuseförmige Abdeckung 102 geschoben werden, welche an ihrer Oberseite eine Aussparung aufweist, in welcher das Anbringteil 26 mit seiner Schneidklemme 100 aufgenommen werden kann. Die Abdeckung 102 ist nach vorne hin komplett offen, so daß die Kontaktzunge 28 mit ihrer Überspannungs/Überstrom-Schutzeinrichtung 84 und dem darauf aufgesetzten Anbringteil 26 von dieser Seite her in die Abdeckung 102 einsetzbar ist.

Auf der dem Abringteil 26 zugewandten Seite der Abdeckung 102, d.h. hier auf deren unteren Begrenzungswand 104, ist die Abdeckung 102 mit zwei in Richtung quer zu Aufsteckrichtung des Gehäuses (hier Längsrichtung der Kontaktzunge 28) in einem Abstand voneinander angeordneten Haltearmen 106, 108 versehen, in welchen auf den einander zugewandten Innenseiten sowie benachbart zu der unteren Begrenzungswand 104 eine in die genannte Aufsteckrichtung verlaufende Längsnut 106a, 108a ausgebildet ist. In diese Längsnuten 106a, 108a greift das Halteteil 26 randseitig ein und ist damit gegen Ablösen nach unten und oben gesichert.

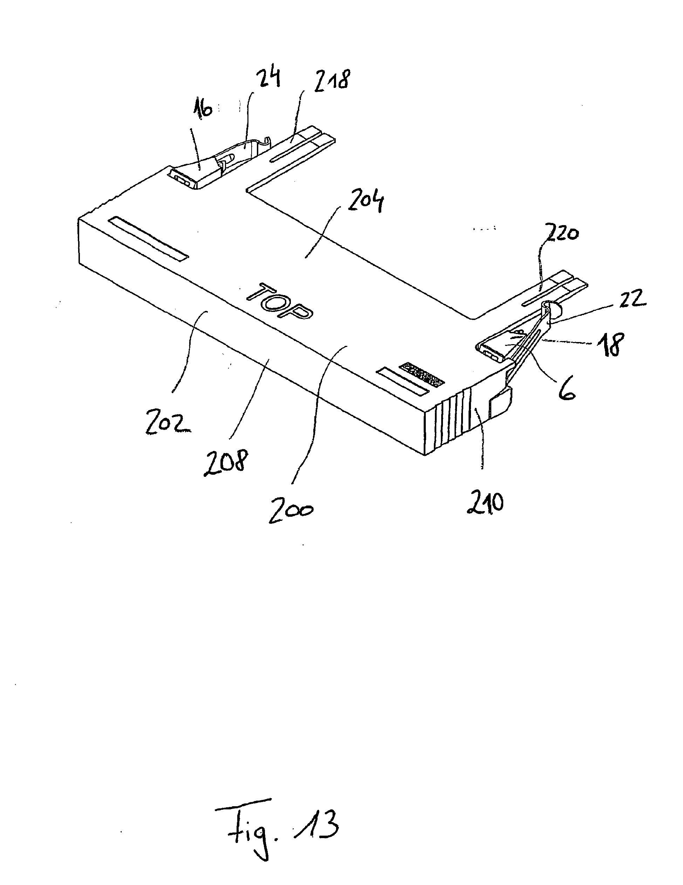

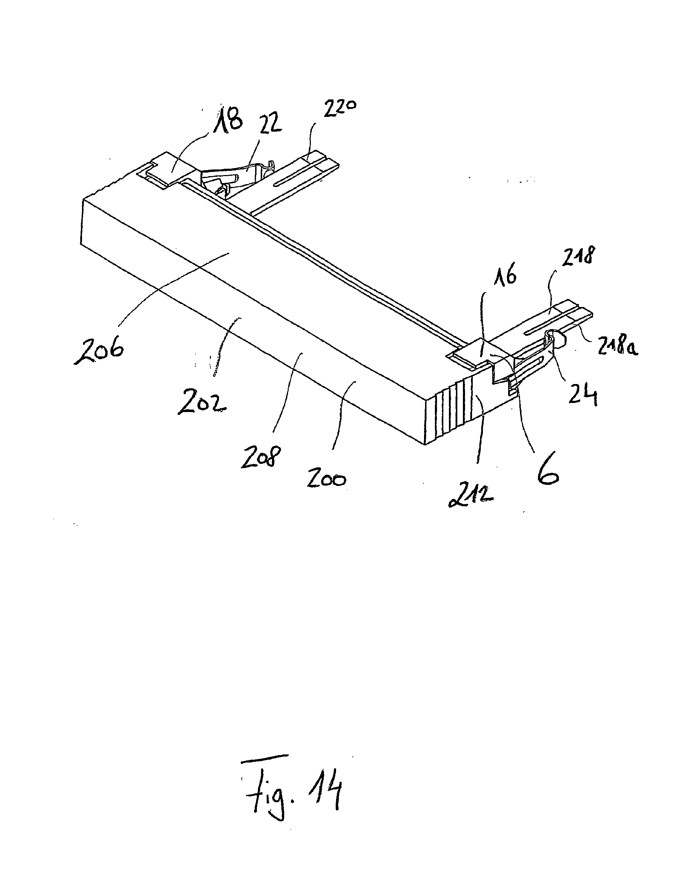

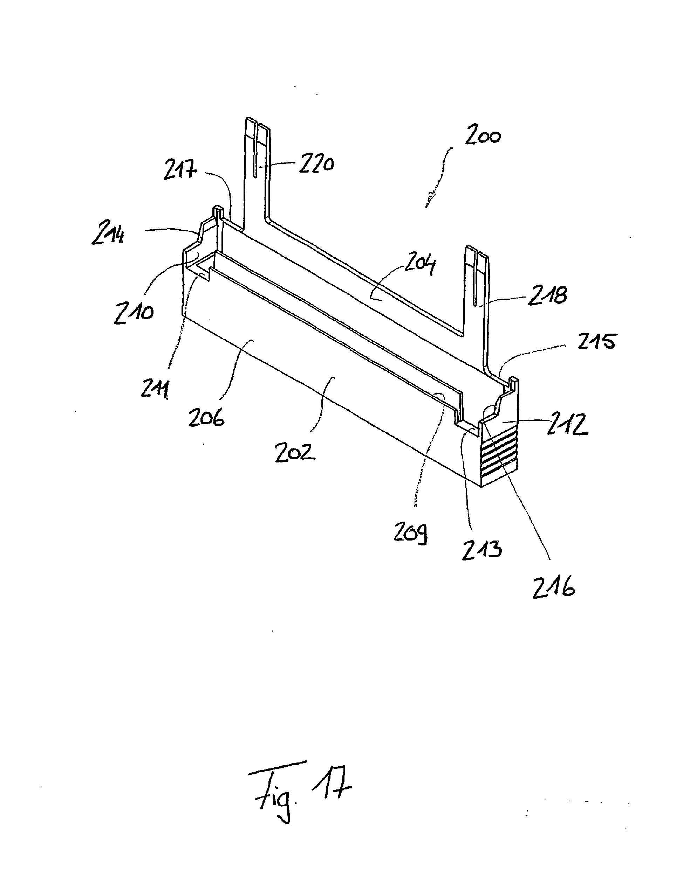

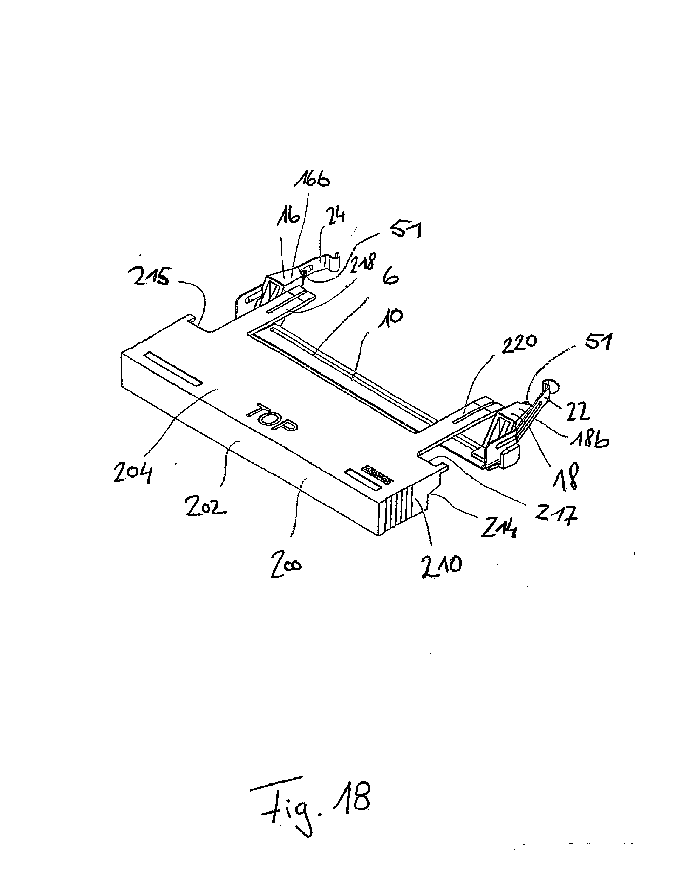

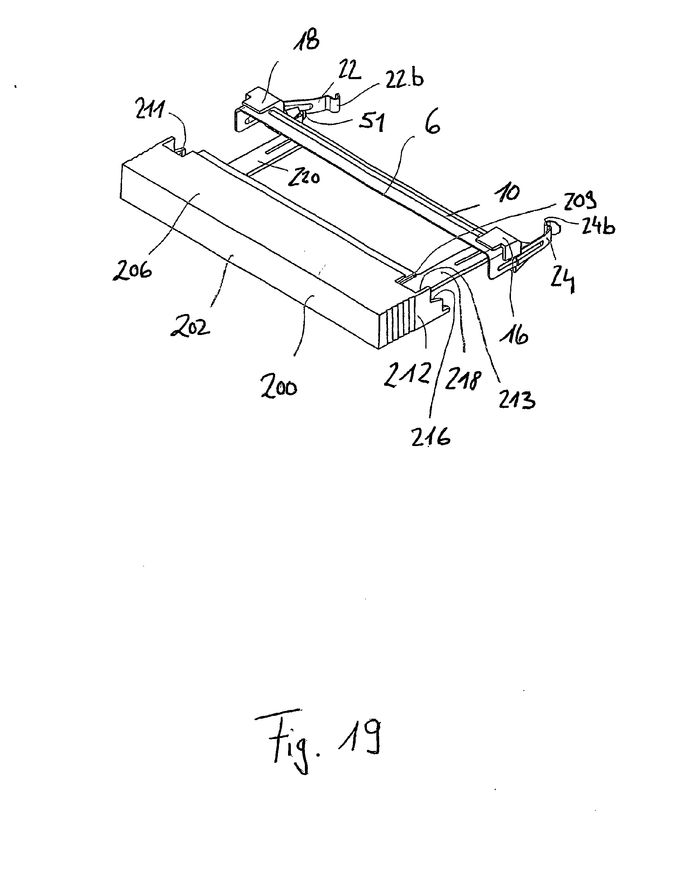

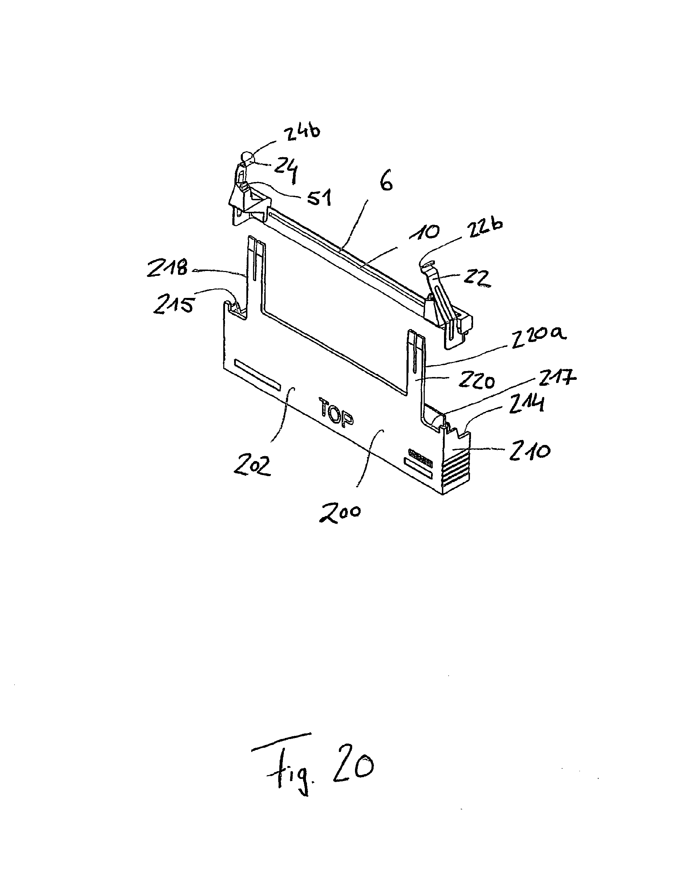

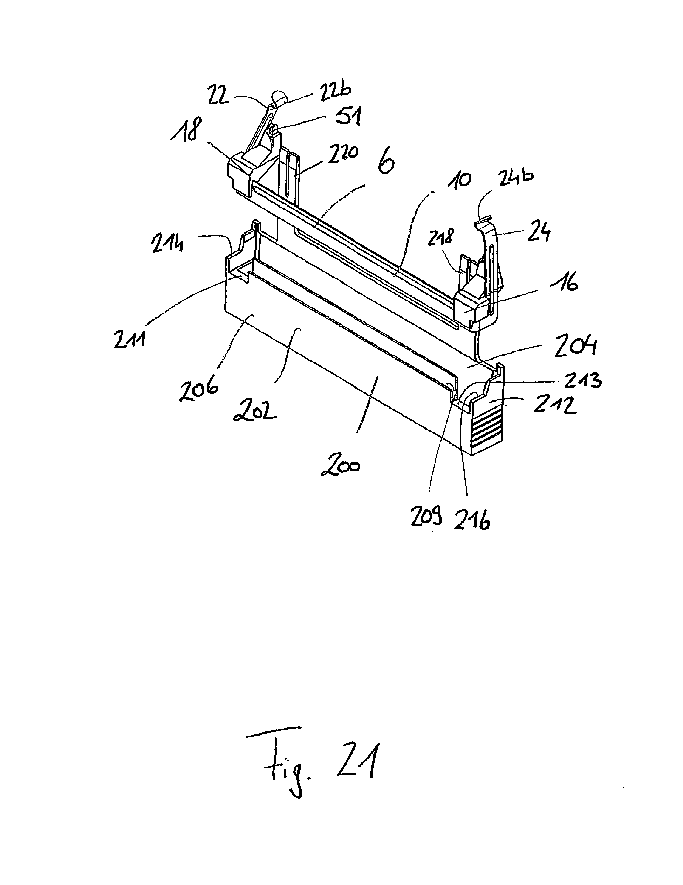

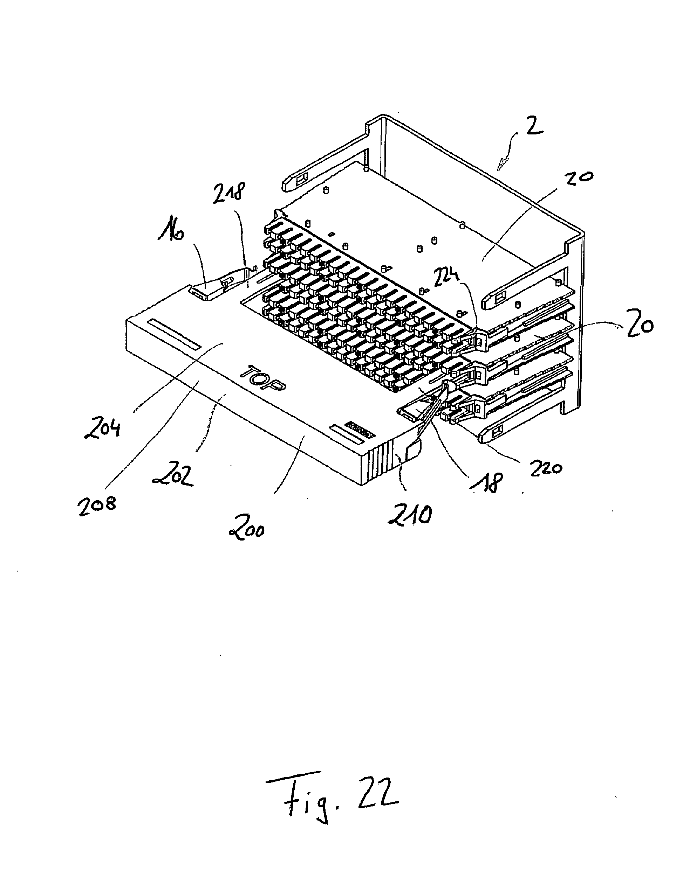

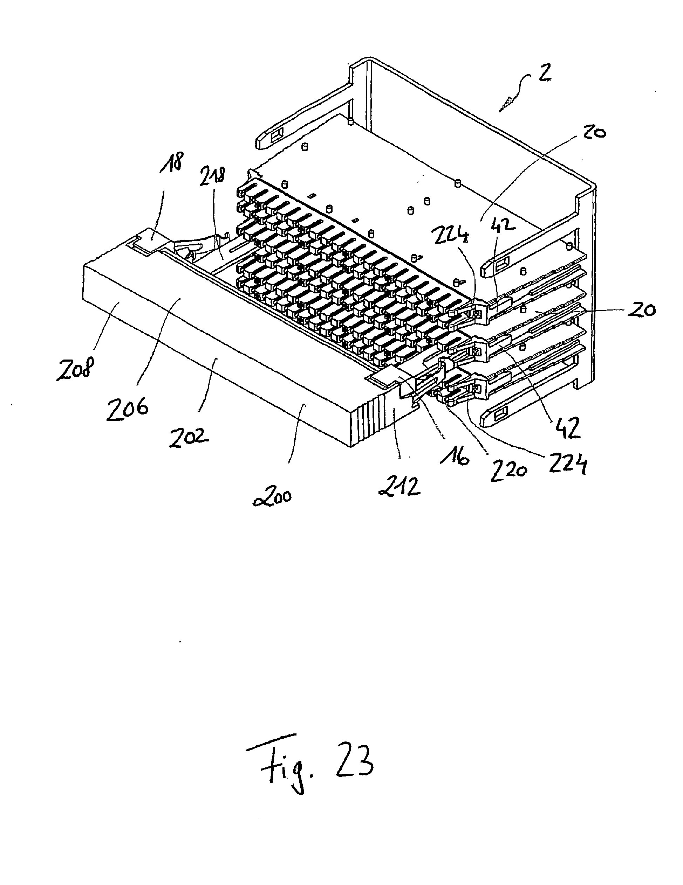

In Figuren 13 bis 16 ist eine Handhabungsvorrichtung 200 zum Montieren einer erfindungsgemäßen Erdungsvorrichtung 6 an ein zugehöriges Funktionselement 20 nach einer Ausführungsform der Erfindung mit eingesetzter Erdungsvorrichtung 6 dargestellt. Figur 17 zeigt die Handhabungsvorrichtung 200 ohne darin eingesetzte Erdungsvorrichtung. In Figuren 18 bis 21 sind die Handhabungsvorrichtung 200 und die Erdungsvorrichtung 6 in einem Zustand dargestellt, in dem die Erdungsvorrichtung 6 mit ihrer Erdungsschiene 10 gerade in die Handhabungsvorrichtung 200 eingesetzt wird. In Figuren 22 und 23 ist dargestellt, wie mittels der erfindungsgemäßen Handhabungsvorrichtung 200 eine Erdungsvorrichtung 6 an eine Verteilereinrichtung 2 anmontiert wird.

Die Handhabungsvorrichtung 200 weist hiernach einen langgestreckten, kastenförmigen Grundkörper 202 auf, der eine obere Begrenzungswand 204, eine untere Begrenzungswand 206 sowie eine längsseitige Begrenzungswand 208 und zwei stirnseitige Begrenzungswände 210, 212 aufweist. An der der längsseitigen Begrenzungswand 208 gegenüberliegenden Längsseite ist der kastenförmige Grundkörper 202 offen (siehe z.B. Figur 17).

Wie insbesondere aus Figur 17 ersichtlich ist, weist der kastenförmige Grundkörper 202 eine in seiner Längsrichtung verlaufende Aufnahmenut 209 auf, welcher von der unteren Begrenzungswand 206 an deren der offenen Seite des Grundkörpers 202 zugewandten Stirnseite ausgebildet wird. Die Aufnahmenut 209 ist hierbei zur selben Richtung hin offen wie der Grundkörper 202.

Die Länge der Erdungsschiene 10 ist geringfügig kleiner als die Länge des kastenförmigen Grundkörpers 202 der Handhabungsvorrichtung 200, so daß die Erdungsschiene 10 an ihren beiden Längsenden von den Stirnwänden 210, 212 des kastenförmigen Grundkörpers 202 mit geringfügigem Spiel begrenzt ist, falls die Erdungsvorrichtung 6 mit ihrer Erdungsschiene 10 in die Aufnahmenut 209 der Handhabungsvorrichtung 200 eingesetzt ist. Die Stirnwände 210, 212 des kastenförmigen Grundkörpers 200 stellen somit seitliche Anschläge für die in die Handhabungsvorrichtung 200 eingesetzte Erdungsvorrichtung 6 dar.

Indem die etwas über die Erdungsschiene 10 hinausreichenden Halteteile 16, 18 nunmehr mit den seitlichen Stirnwänden 210, 212 der Handhabungsvorrichtung 200 kollidieren würden, sind in den seitlichen Stirnwänden 210, 212 korrespondierende Aussparungen 214, 216 ausgebildet, in welchen, wie z.B. aus Figuren 17 bis 19 ersichtlich ist, jeweils ein Abschnitt der Halteteile 16, 18 aufnehmbar ist. Gleiches gilt für die untere und die obere Begrenzungswand 204, 206 des Grundkörpers, in denen ebenfalls jeweils Aussparungen 211, 213; 215, 217 zur Aufnahme von Abschnitten der Halteteile 16, 18 aufgenommen sind.

Die Handhabungsvorrichtung 200 weist ferner zwei langgestreckte Führungszungen 218, 220 auf, welche jeweils an einem ihnen zugeordneten Längsendabschnitt der Handhabungsvorrichtung 200 angeordnet sind und welche sich parallel zur Öffnungsrichtung der Aufnahmenut 209 und der offenen Seite des kastenförmigen Grundkörpers 202 und damit auch senkrecht zur Längsrichtung der Handhabungsvorrichtung 200 und der darin eingesetzten Erdungsvorrichtung 6 nach vorne erstrecken. Die beiden Führungszungen 218, 220 sind aus der oberen Begrenzungswand 204 des Grundkörpers 202 ausgeformt; der seitliche Abstand zwischen der jeweiligen Führungszunge 218, 220 zur zugehörigen seitlichen Stirnwand 210, 212 des Grundkörpers ist so groß gewählt, daß dazwischen die Halteteile 16, 18 und die zugehörigen Kontaktfedern 22, 24 aufnehmbar sind (siehe z.B. Figuren 13 bis 15).

Die beiden Führungszungen 218, 220 haben jeweils an ihrer seitlichen Außenseite eine geradlinige Führungsfläche 218a, 220a; die beiden Führungsflächen 218a, 220a sind damit voneinander abgewandt. Der Längsabstand zwischen diesen beiden Führungsflächen 218a, 218b ist geringfügig kleiner als der Längsabstand der stirnseitigen Begrenzungswände eines Führungselements 20, so daß die Handhabungsvorrichtung 200, wie aus Figuren 22 und 23 ersichtlich ist, mit ihren beiden Führungszungen 218, 220 in das Funktionselement 20 geführt hineinschiebbar ist. Hierbei gleiten die beiden Führungszungen 218, 220 mit ihren seitlichen Führungsflächen 218a, 218b seitlich außen an einer zugehörigen stirnseitigen Begrenzungswand des Funktionselements 20 entlang.

Die durch die Aufnahmenut 209 bezüglich der Handhabungsvorrichtung 200 und deren Führungszungen 218, 220 festgelegte Lage der Erdungsvorrichtung 6 ist derart, daß sowohl die Halteteile 16, 18 mit ihren Befestigungsstücken 51 als auch die Kontaktfedern 22, 24 mit ihren Eingriffsteilen 22b, 24b genau zu den korrespondierenden Gegenstücken am Funktionselement 20 hingeführt werden. Hierdurch erleichtert sich die Montage erheblich, wobei auch die Gefahr von Beschädigungen durch Verkanten und falsches Ansetzen von Erdungsvorrichtungen 6 vermindert ist.

Das System aus Handhabungsvorrichtung 200 und Erdungsvorrichtung 6 ist derart abgestimmt, daß sich die Kontaktfedern 22, 24 bei in die Handhabungsvorrichtung 200 eingesetzter Erdungsvorrichtung 6 benachbart zu den Führungszungen 218, 220 parallel zu diesen nach vorne erstrecken.

Damit die Kontaktfedern 220, 218 beim Aufschieben der Erdungsvorrichtung 6 auf das Funktionselement 20 leichter nach außen ausfedern, sind, wie aus Figuren 22 und 23 ersichtlich ist, an dem jeweiligen Funktionselement 20 Rampen 224 vorgesehen, die in Richtung der Einsteckrichtung der Erdungsvorrichtung 6 nach außen ansteigen (siehe Figuren 22 und 23). Die Kontaktfedern 22, 24 gleiten beim Aufschieben der Erdungsvorrichtung 6 unter seitlichem Ausfedern über diese Rampen 224 und übergleiten daraufhin den am jeweiligen Funktionselement 20 vorgesehenen Verriegelungsarm 42, ohne daß die Gefahr einer Blockierung der gesamten Aufschiebebewegung besteht.

Die Handhabungsvorrichtung 200 ist bevorzugt als KunststoffSpritzgußteil vorgesehen.

Indem die Erdungsvorrichtung 6 lediglich lose von vorne in die Handhabungsvorrichtung 200 eingesetzt ist, insbesondere ist die Erdungsschiene 10 nur lose in der Aufnahmenut 209 aufgenommen, kann die Handhabungsvorrichtung 200 zwar Kräfte in die Aufsteckrichtung auf die Erdungsvorrichtung 6 ausüben, die Handhabungsvorrichtung 200 kann jedoch nach erfolgter Montage der Erdungsvorrichtung 6 am Funktionselement 20 einfach von der dann fest am Funktionselement 20 angebrachten, d.h. hier angesteckten und angeklemmten, Erdungsvorrichtung 6 abgenommen werden.

## Patentansprüche

1. Erdungsvorrichtung (6) für eine Verteilereinrichtung (2), mit einer langgestreckten Erdungsschiene (10) aus elektrisch leitendem Material, welche Erdungsschiene (10) an ihren Endabschnitten (12, 14) jeweils mit einem separaten Halteteil (16, 18) zum Anbringen der Erdungsschiene (10) an einem Funktionselement (20) der Verteilereinrichtung (2) versehen ist, und an welcher Erdungsschiene (10) an deren Endabschnitten (12, 14) ferner jeweils eine elektrisch leitende Kontaktfeder (22, 24) vorgesehen ist zur Kontaktierung einer Erdungskontaktstelle der Verteilereinrichtung (2), **dadurch gekennzeichnet, dass** jede Kontaktfeder sich an dem jeweiligen Halteteil vorbei erstreckt.

2. Erdungsvorrichtung (6) nach Anspruch 1, wobei die Halteteile (16, 18) aus nichtleitendem Material, insbesondere Kunststoffmaterial, sind.

3. Erdungsvorrichtung (6) nach Anspruch 1 oder 2, wobei die Halteteile (16, 18) jeweils ein sich im wesentlichen in Richtung senkrecht zur Längsrichtung der Erdungsschiene (6) erstreckendes Haltestück (51) zum Anbringen am zugehörigen Funktionselement (20) aufweisen, und wobei sich die Kontaktfedern (22, 24) im wesentlichen in die gleiche Richtung wie die Haltestücke (51) von der Erdungsschiene (10) aus wegerstrecken.

4. Erdungsvorrichtung (6) nach Anspruch 3, wobei die Erdungsschiene (6) in eine Richtung senkrecht zu ihrer Längsrichtung sowie senkrecht zur Erstreckungsrichtung der Haltestücke (51) gegen die Haltestücke (51) versetzt angeordnet ist.

5. Erdungsvorrichtung (6) nach einem der Ansprüche 1 bis 4, wobei sich die Kontaktfedern (22, 24) bezüglich der Längsrichtung der Erdungsschiene (10) seitlich außen an den Halteteilen (16, 18) vorbei erstrecken und seitlich nach außen federelastisch ausspreizbar sind, so daß sie die an der Verteilereinrichtung (2) vorgesehenen Erdungskontaktstellen von außen her federnd kontaktieren können.

6. Verteilereinrichtung (2) mit einer langgestreckten. Aufnahmevorrichtung (30), einem oder mehreren in der Aufnahmevorrichtung (30) aufgenommenen Funktionselement/en (20), welche aneinandergestapelt aufnehmbar sind und welche jeweils einen langgestreckten Kontaktabschnitt (44) mit Anschlußstellen (46, 48) zum Anschluß von ankommenden und abgehenden elektrischen Leitungen aufweist, wenigstens einer dem jeweiligen Funktionselement (20) zugeordneten Erdungsvorrichtung (6) nach einem der Ansprüche 1 bis 5, deren Erdungsschiene (10) parallel zum langgestreckten Kontaktabschnitt (44) des zugeordneten Funktionselements (20) angeordnet ist und die mittels der zugehörigen Halteteile (16, 18) an den Längsendabschnitten des Funktionselements (20) angebracht ist, und mit wenigstens einem Schutzstecker (8), welcher derart an der Erdungsschiene (10) angebracht ist, dass sich eine Kontaktzunge (28) desselben zur Kontaktierung der ihm zugeordneten elektrischen Leitungen in Richtung zu dem Funktionselement (20) erstreckt.

7. Verteilereinrichtung (2) nach Anspruch 6, wobei der oder jeder Schutzstecker (8) weiterhin eine an die Kontaktzunge (28) angeschlossene Überspannungs/Überstrom-Schutzeinrichtung (84) umfasst, welche eine Erdungs-Elektrode (90) aufweist, welche einen stabförmigen Ansatz (92) aufweist und über welche ein Überspannungsstrom ableitbar ist, und wobei der oder jeder Schutzstecker (8) weiterhin ein elektrisch leitendes Anbringteil (26) umfasst, mittels dessen der jeweilige Schutzstecker (8) an der Erdungsvorrichtung (6) anbringbar ist und welches mit der Erdungs-Elektrode (90) in elektrischem Kontakt ist, wobei das Anbringteil (26) zur Herstellung der mechanischen und der elektrischen Verbindung zwischen dem jeweiligen Schutzstecker (8) und der jeweiligen Erdungsvorrichtung (6) aufweist: eine Schneidklemme (100), mittels welcher das Anbringteil (90) an den stabförmigen Ansatz (92) der Erdungs-Elektrode geklemmt ist, und ein Befestigungsteil (94) zum Befestigen des Anbringteils (26) an der Erdungsvorrichtung (6).

8. Verteilereinrichtung (2) nach Anspruch 7, wobei das Anbringteil (94) des oder jedes Schutzsteckers (8) ein Klemmteil ist, welches an der Erdungsvorrichtung (6) anklemmbar ist.

9. Verteilereinrichtung (2) nach einem oder mehreren der Anspruch 6 bis 8, wobei die Erdungsschiene (10) der jeweiligen Erdungsvorrichtung (6) in Richtung längs der Aufnahmevorrichtung (30) gegen das zugehörige Funktionselement (20) versetzt angeordnet ist.

10. Verteilereinrichtung (2) nach Anspruch wobei die Anschlußstellen (46, 48) längs des langgestreckten Kontaktabschnitts (44) des jeweiligen Funktionselements (20) angeordnet sind und aufgeteilt sind in eine Reihe von ersten Anschlußstellen (46) für ankommende Leitungen und eine Reihe von zweiten Anschlußstellen (48) für abgehende Leitungen, und wobei die Erdungsschiene (10) der zugeordneten Erdungsvorrichtung (6) benachbart zu der Reihe zweiter Anschlußstellen (48) auf deren von der Reihe erster Anschlußstellen (46) abgewandten Seite angeordnet ist.

11. Verteilereinrichtung (2) nach einem der Ansprüche 6 bis 10, wobei die Aufnahmevorrichtung (30) in Form einer langgestreckten, elektrisch leitenden Aufnahmewanne mit einem Wannenboden (32) und zwei Wannenschenkeln (34, 36) ausgebildet ist, in denen langgestreckte Aufnahmezungen (38) ausgebildet sind, zwischen welche das jeweilige Funktionselement (20) eingesetzt ist, wobei die Kontaktfedern (22, 24) der am jeweiligen Funktionselement (20) angebrachten Erdungsvorrichtung (6) die Aufnahmezungen (38) zur Herstellung eines elektrischen Kontakts federnd kontaktieren.

12. Verteilereinrichtung (2) nach Anspruch 11, wobei die Kontaktfedern (22, 24) der Erdungsschiene (10) der jeweiligen Erdungsvorrichtung (6) an ihrem freien Endabschnitt mit einem Eingriffsteil (22b, 24b) versehen sind, welches mit einem korrespondierenden Gegenstück, das am jeweiligen, zugeordneten Funktionselement (20) vorgesehen ist, im Eingriff steht, um die Erdungsvorrichtung (6) am Funktionselement (20) zu fixieren.

## Claims

1. Earthing apparatus (6) for a distribution device (2), having an elongated earthing rail (10) which is composed of electrically conductive material and is provided at each of its end sections (12, 14) with a separate holding part (16, 18) for fitting the earthing rail (10) to a functional element (20) of the distribution device (2), and an electrically conductive contact spring (22, 24) is also provided on each of the end sections (12, 14) of the earthing rail (10) in order to make contact with an earthing contact point on the distribution device (2), **characterized in that** each contact spring extends past the respective holding part.

2. Earthing apparatus (6) according to Claim 1, in which the holding parts (16, 18) are composed of nonconductive material, in particular plastic material.

3. Earthing apparatus (6) according to Claim 1 or 2, in which the holding parts (16, 18) each have a holding piece (51), which extends essentially in the direction at right angles to the longitudinal extent of the earthing rail (6), for fitting to the associated functional element (20), and in which the contact springs (22, 24) extend away from the earthing rail (10), essentially in the same direction as the holding pieces (51).

4. Earthing apparatus (6) according to Claim 3, in which the earthing rail (6) is arranged offset with respect to the holding pieces (51) in a direction at right angles to its longitudinal direction and at right angles to the direction in which the holding pieces (51) extend.

5. Earthing apparatus (6) according to one of Claims 1 to 4, in which the contact springs (22, 24) extend externally past the holding parts (16, 18) at the sides with respect to the longitudinal direction of the earthing rail (10) and can be spread apart resiliently outwards at the sides, so that the earthing contact points which are provided on the distribution device (2) can be made contact with in a sprung manner from the outside.

6. Distribution device (2) having an elongated retaining apparatus (30), one or more functional element or elements (20) which is or are held in the retaining apparatus (30), can be held stacked one on top of the other and in each case has an elongated contact section (44) with connecting points (46, 48) for connection of incoming and outgoing electrical cables, at least one earthing apparatus (6), which is associated with the respective functional element (20), according to one of claims 1 to 5, whose earthing rail (10) is arranged parallel to the elongated contact section (44) of the associated functional element (20) and which is fitted by means of the associated holding parts (16, 18) to the longitudinal end sections of the functional element (20), and having at least one safety plug (8), which is fitted to the earthing rail (10) such that its contact tongue (28) extends in the direction of the functional element (20), in order to make contact with the electrical cables associated with it.

7. Distribution device (2) according to Claim 6, in which the or each safety plug (8) furthermore comprises an overvoltage/overcurrent protection device (84) which is connected to the contact tongue (28) and has an earthing electrode (90) which has an attachment (92) in the form of a rod and via which an overvoltage current can be dissipated, and the or each safety plug (8) furthermore comprising an electrically conductive fitting (26) by means of which the respective safety plug (8) can be fitted to the earthing apparatus (6) and which is in electrical contact with the earthing electrode (90), with the fitting (26) having, in order to produce the mechanical and the electrical connection between the respective safety plug (8) and the respective earthing apparatus (6): an insulation-displacement terminal (100), by means of which the fitting (90) is clamped to the attachment (92), which is in the form of a rod, on the earthing electrode, and an attachment part (94) for attaching the fitting (26) to the earthing apparatus (6).

8. Distribution device (2) according to Claim 7, in which the fitting (94) of the or each safety plug (8) is a clamping part which can be clamped to the earthing apparatus (6).

9. Distribution device (2) according to one or more of Claims 6 to 8, in which the earthing rail (10) of each earthing apparatus (6) is arranged offset with respect to the associated functional element (20) in the direction along the retaining apparatus (30).

10. Distribution device (2) according to Claim 9, in which the connecting points (46, 48) are arranged along the elongated contact section (44) of the respective functional element (20) and are subdivided into a row of first connecting points (46) for incoming cables and a row of second connecting points (48) for outgoing cables, and in which the earthing rail (10) of the associated earthing apparatus (6) is arranged adjacent to the row of second connecting points (48), on its side facing away from the row of first connecting points (46).

11. Distribution device (2) according to one of Claims 6 to 10, in which the retaining apparatus (30) is in the form of an elongated, electrically conductive retaining trough with a trough base (32) and two trough limbs (34, 36), in which elongated retaining tongues (38) are formed, between which the respective functional element (20) is inserted, and in which the contact springs (22, 24) of the earthing apparatus (6) which is fitted to the respective functional element (20) make contact in a sprung manner with the retaining tongues (38) in order to produce an electrical contact.

12. Distribution device (2) according to Claim 11, in which the contact springs (22, 24) on the earthing rail (10) of the respective earthing apparatus (6) are provided on their free end section with an engagement part (22b, 24b), which engages with a corresponding mating piece which is provided on the respective associated functional element (20), in order to fix the earthing apparatus (6) on the functional element (20).

## Revendications

1. Dispositif de mise à la terre (6) pour une installation de distribution (2), comprenant une barre de mise à la terre allongée (10) en matériau électriquement conducteur, laquelle barre de mise à la terre (10) est pourvue, au niveau de ses portions d'extrémité (12, 14), à chaque fois d'une partie de retenue séparée (16, 18) pour le montage de la barre de mise à la terre (10) sur un élément fonctionnel (20) de l'installation de distribution (2), et sur laquelle barre de mise à la terre (10) est en outre à chaque fois prévu, au niveau de ses portions d'extrémité (12, 14), un ressort de contact électriquement conducteur (22, 24) pour assurer le contact avec un point de contact de mise à la terre de l'installation de distribution (2), **caractérisé en ce que** chaque ressort de contact s'étend devant la partie de retenue respective.

2. Dispositif de mise à la terre (6) selon la revendication 1, dans lequel les parties de retenue (16, 18) sont en matériau non conducteur, en particulier en matériau plastique.

3. Dispositif de mise à la terre (6) selon la revendication 1 ou 2, dans lequel les parties de retenue (16, 18) présentent à chaque fois une pièce de retenue (51) s'étendant essentiellement dans la direction perpendiculaire à la direction longitudinale de la barre de mise à la terre (10), destinée à être montée sur l'élément fonctionnel associé (20), et dans lequel les ressort de contact (22, 24) s'étendent essentiellement dans la même direction que les pièces de retenue (51) à l'écart de la barre de mise à la terre (10).

4. Dispositif de mise à la terre (6) selon la revendication 3, dans lequel la barre de mise à la terre (10) est disposée de manière décalée par rapport aux pièces de retenue (51) dans une direction perpendiculaire à sa direction longitudinale et perpendiculaire à la direction d'étendue des pièces de retenue (51).

5. Dispositif de mise à la terre (6) selon l'une quelconque des revendications 1 à 4, dans lequel les ressorts de contact (22, 24) s'étendent latéralement à l'extérieur devant les parties de retenue (16, 18) par rapport à la direction longitudinale de la barre de mise à la terre (10), et peuvent être écartés de manière élastique à ressort latéralement vers l'extérieur, de sorte qu'ils puissent venir en contact élastiquement depuis l'extérieur avec les points de contact de mise à la terre prévus sur l'installation de distribution (2).

6. Installation de distribution (2) comprenant un dispositif de réception allongé (30), un ou plusieurs éléments fonctionnels (20) reçus dans le dispositif de réception (30), lesquels peuvent être reçus de manière empilée les uns contre les autres, et présentant à chaque fois une portion de contact allongée (44) avec des points de raccordement (46, 48) pour le raccordement de lignes électriques entrantes et sortantes, au moins un dispositif de mise à la terre (6) associé à l'élément fonctionnel respectif (20), selon l'une quelconque des revendications 1 à 5, dont la barre de mise à la terre (10) est disposée parallèlement à la portion de contact allongée (44) de l'élément fonctionnel associé (20), lequel dispositif de mise à la terre (6) est monté au moyen des parties de retenue associées (16, 18) sur les portions d'extrémité longitudinales de l'élément fonctionnel (20), et au moins un connecteur de protection (8) qui est monté sur la barre de mise à la terre (10) de telle sorte qu'une langue de contact (28) de celui-ci s'étende dans la direction de l'élément fonctionnel (20) pour assurer le contact avec les lignes électriques qui lui sont associées.

7. Installation de distribution (2) selon la revendication 6, dans laquelle le ou chaque connecteur de protection (8) comprend en outre un système de protection contre les surtensions/les surintensités (84) raccordé à la langue de contact (28), lequel présente une électrode de mise à la terre (90) qui présente un bout en forme de barre (92) et par le biais de laquelle un courant de surtension peut être dévié, et dans laquelle le ou chaque connecteur de protection (8) comprend en outre une partie de montage (26) électriquement conductrice, au moyen de laquelle le connecteur de protection respectif (8) peut être monté sur le dispositif de mise à la terre (6) et qui est en contact électrique avec l'électrode de mise à la terre (90), la partie de montage (26), pour établir la connexion mécanique et électrique entre le connecteur de protection respectif (8) et le dispositif de mise à la terre respectif (6), présentant : une borne tranchante (100), au moyen de laquelle la partie de montage (90) est serrée contre le bout en forme de barre (92) de l'électrode de mise à la terre, et une partie de fixation (94) pour la fixation de la partie de montage (26) sur le dispositif de mise à la terre (6).

8. Installation de distribution (2) selon la revendication 7, dans laquelle la partie de montage (94) du ou de chaque connecteur de protection (8) est une partie de serrage, qui peut être serrée sur le dispositif de mise à la terre (6).

9. Installation de distribution (2) selon l'une quelconque ou plusieurs des revendications 6 à 8, dans laquelle la barre de mise à la terre (10) de chaque dispositif de mise à la terre (6) est disposée de manière décalée par rapport à l'élément fonctionnel associé (20) dans la direction le long du dispositif de réception (30).

10. Installation de distribution (2) selon la revendication 9, dans laquelle les points de raccordement (46, 48) sont disposés le long de la portion de contact allongée (44) de chaque élément fonctionnel (20) et sont divisés en une rangée de premiers points de raccordement (46) pour les lignes entrantes et une rangée de deuxièmes points de raccordement (48) pour les lignes sortantes, et dans laquelle la barre de mise à la terre (10) du dispositif de mise à la terre associé (6) est disposée à côté de la rangée de deuxièmes points de raccordement (48) sur leur côté opposé à la rangée de premiers points de raccordement (46).

11. Installation de distribution (2) selon l'une quelconque des revendications 6 à 10, dans laquelle le dispositif de réception (30) est réalisé sous forme d'une cavité de réception allongée et électriquement conductrice, avec un fond de cavité (32) et deux branches de cavité (34, 36), dans lesquelles sont réalisées des langues de réception allongées (38), entre lesquelles est inséré l'élément fonctionnel respectif (20), les ressorts de contact (22, 24) du dispositif de mise à la terre (6) monté sur l'élément fonctionnel respectif (20) venant en contact à ressort avec les langues de réception (38) pour établir un contact électrique.

12. Installation de distribution (2) selon la revendication 11, dans laquelle les ressorts de contact (22, 24) de la barre de mise à la terre (10) du dispositif de mise à la terre respectif (6) sont pourvus au niveau de leur portion d'extrémité libre d'une partie d'engagement (22b, 24b), qui est en prise avec une partie conjuguée correspondante qui est prévue sur l'élément fonctionnel associé respectif (20), afin de fixer le dispositif de mise à la terre (6) sur l'élément fonctionnel (20).
